# FASCICULE DE BREVET EUROPEEN

(11) **EP 3 489 564 B1**
(45) Date de publication et mention de la délivrance du brevet: **12.08.2020**
(21) Numéro de dépôt: 18208099.4
(22) Date de dépôt: 23.11.2018
(51) Int. Cl.: F16L 37/56, F16L 37/36, F16L 25/01, E02F 3/36

(54) **PLAQUE MULTI-RACCORDS ET ENSEMBLE DE PLAQUES COMPRENANT UNE TELLE PLAQUE MULTI-RACCORDS**
MULTIANSCHLUSSPLATTE UND GESAMTHEIT VON PLATTEN, DIE EINE SOLCHE MULTIANSCHLUSSPLATTE UMFASST
MULTI-CONNECTOR PLATE AND PLATE ASSEMBLY COMPRISING SUCH A MULTI-CONNECTOR PLATE

(30) Priorité: 23.11.2017 FR 1761097
(43) Date de publication de la demande: 29.05.2019
(73) Titulaire: Staubli Faverges, 74210 Faverges-Seythenex (FR)
(72) Inventeur: TIBERGHIEN, Alain-Christophe, 74320 Sévrier (FR); GUIN, Philippe, 74000 Annecy (FR); GOBBER, Anthonin, 74210 Faverges-Seythenex (FR)
(74) Mandataire: Lavoix

(56) Documents cités:
- EP-A1- 0 037 351
- EP-A2- 0 621 430
- WO-A2-2013/074047

## Description

L'invention concerne une plaque multi-raccords pour le raccordement simultané de plusieurs raccords de type fluidique et/ou électrique. L'invention concerne également un ensemble de plaques comprenant une telle plaque multi-raccords.

Il est connu de rapprocher et verrouiller deux plaques multi-raccords par un dispositif de verrouillage porté par l'une des deux plaques et comprenant un élément tournant ainsi qu'un arbre de verrouillage mobile en translation, un dispositif de transformation du mouvement de rotation de l'élément tournant en mouvement de translation de l'arbre étant interposé entre l'arbre de verrouillage et l'élément tournant. L'élément tournant est actionné par un opérateur lorsqu'il convient d'accoupler ou de désaccoupler les raccords.

WO 2013 074 047 décrit notamment un levier destiné à être actionné par un opérateur et entrainant en rotation un élément tournant à l'intérieur d'un bâti. Un doigt de commande est solidaire en rotation de l'élément tournant et est engagé dans un arbre de verrouillage coulissant, guidé en translation dans le bâti. L'extrémité évasée de l'arbre de verrouillage coopère avec des billes de verrouillage logées dans une bague de verrouillage repoussée par un ressort vers l'extrémité de l'arbre de verrouillage. Cette bague s'engage dans une douille d'une deuxième plaque à la connexion. Le mouvement de recul de l'arbre de verrouillage 2 provoque alors l'engagement des billes de verrouillage dans la douille puis le rapprochement des plaques et le raccordement des raccords. Une goupille permet de verrouiller la position de l'élément tournant dans la configuration approchée accouplée dans laquelle les raccords sont accouplés.

Des dispositifs similaires sont également décrits dans JPH 07 208 673 et US 8 864 179.

Ces plaques multi-raccords ont pour vocation à être placées au plus près des machines, presses d'injection par exemple, que les raccords portés par les plaques multi-raccords permettent d'alimenter en fluide ou électricité et selon l'installation, l'accès de l'opérateur au dispositif de verrouillage peut être limité.

Lors de la connexion, les raccords fluidiques ont des soupapes montées sur ressort qui créent des efforts de répulsion que le dispositif de verrouillage doit contrecarrer. Cela implique que l'opérateur doit parfois exercer un effort important à l'accouplement.

C'est à ces inconvénients qu'entend remédier l'invention en proposant une nouvelle plaque multi-raccords plus ergonomique pour l'opérateur, notamment en termes d'accès au dispositif de verrouillage ou d'efforts de répulsion.

A cet effet, l'invention concerne une plaque multi-raccords pour le raccordement simultané de plusieurs raccords de type fluidique et/ou électrique, la plaque comportant un dispositif de verrouillage selon une direction de raccordement d'éléments de raccord portés par la plaque à des éléments de raccord complémentaires portés par une deuxième plaque, le dispositif de verrouillage comprenant un bâti fixe sur la plaque, des organes de verrouillage et un mécanisme d'entraînement, le mécanisme d'entraînement comprenant :
- un élément tournant mobile en rotation dans le bâti, entre une configuration désaccouplée et une configuration accouplée de la plaque,
- un élément coulissant mobile en translation par rapport au bâti selon la direction de raccordement et qui coopère avec les organes de verrouillage, les organes de verrouillage étant mobiles par rapport à l'élément coulissant entre une première position déverrouillée où ils libèrent un passage pour la deuxième plaque par rapport à l'élément coulissant, et une deuxième position verrouillée où ils sont aptes à solidariser l'élément coulissant et la deuxième plaque selon la direction de raccordement,
- un ou des éléments de transformation du mouvement de rotation de l'élément tournant en mouvement de translation de l'élément coulissant,
dans la configuration désaccouplée, l'élément coulissant est dans une position avancée par rapport au bâti et les organes de verrouillage sont aptes à venir dans leur première position déverrouillée,
dans la configuration accouplée, l'élément coulissant est dans une position reculée par rapport au bâti et les organes de verrouillage sont dans leur deuxième position verrouillée.

Cette plaque multi-raccords est caractérisée en ce que le dispositif de verrouillage comprend également :
- plusieurs encoches de cliquetage solidaires d'un élément du mécanisme d'entraînement et juxtaposées dans la direction de mouvement par rapport au bâti de l'élément du mécanisme d'entraînement, les encoches de cliquetage comprenant une encoche finale et au moins une encoche intermédiaire, et
- un cliquet mobile dans un logement du bâti et repoussé par un ressort en direction de l'une des encoches de cliquetage;
et en ce que :
- lorsque le cliquet coopère avec l'encoche intermédiaire, le cliquet limite le mouvement de l'élément coulissant vers sa position avancée à une position intermédiaire entre la position avancée et la position reculée, et
- dans la configuration accouplée, le cliquet coopère avec l'encoche finale et maintient l'élément coulissant dans la position reculée.

Grâce à l'invention, le système de cliquet permet à l'opérateur d'exercer des rotations successives de faible amplitude de l'élément tournant pour obtenir un rapprochement progressif de deux plaques multi-raccords et un raccordement des raccords, ce qui permet une meilleure ergonomie en cas d'accès difficile et d'efforts importants à fournir.

Selon des aspects avantageux mais non obligatoires de l'invention, une telle plaque multi-raccords peut incorporer une ou plusieurs des caractéristiques suivantes :
- En configuration d'engagement dans l'une des encoches de cliquetage, le cliquet est monté dans le bâti avec possibilité de coulissement selon un axe de coulissement, de préférence parallèle à la direction de raccordement.
- Le cliquet est apte à être repoussé par le ressort en coopération selon l'axe de coulissement avec une surface du bâti dans une position de maintien du cliquet dans laquelle le cliquet est dégagé par rapport aux encoches de cliquetage.
- Le cliquet est équipé d'au moins un pion en saillie, le bâti comprend une rainure longitudinale orientée selon l'axe de coulissement du cliquet et une encoche de maintien dans laquelle la rainure longitudinale débouche circonférentiellement à l'axe de coulissement, le pion coopère avec la rainure longitudinale en configuration d'engagement du cliquet dans l'une des encoches de cliquetage, et le cliquet est en position de maintien lorsque le pion est engagé dans l'encoche de maintien.
- Les encoches de cliquetage sont ménagées sur l'élément tournant.
- Chaque encoche de cliquetage intermédiaire et finale est délimitée par un fond et une surface de butée qui s'étend en saillie depuis le fond et en configuration d'engagement dans l'une des encoches de cliquetage intermédiaire et finale, le cliquet forme obstacle à la surface de butée dans une direction de mouvement de l'élément du mécanisme d'entraînement avec encoches de cliquetage entre la configuration accouplée et la configuration désaccouplée.
- Une amplitude de cliquetage du mécanisme d'entraînement correspond à une rotation de 20° à 40° de l'élément tournant dans le bâti.
- La profondeur de chaque encoche intermédiaire est variable.
- La profondeur de l'encoche de cliquetage finale est supérieure à la profondeur maximale des encoches de cliquetage intermédiaires.
- Le cliquet comporte un marqueur visuel, visible de l'extérieur du dispositif de verrouillage excepté quand le cliquet coopère avec le fond de l'encoche de cliquetage finale.
- Les organes de verrouillage sont dans leur deuxième position verrouillée dès que le cliquet est engagé dans la première ou la deuxième encoche intermédiaire.
- L'élément tournant est solidaire en rotation d'un profil de prise pour un outil, ce profil de prise étant accessible depuis l'extérieur du bâti.
- Les éléments de transformation du mouvement de rotation de l'élément tournant en mouvement de translation de l'élément coulissant comprennent un doigt de commande dont l'axe longitudinal central est décalé de l'axe de rotation de l'élément tournant, le doigt de commande étant lié en rotation autour de l'axe de rotation avec l'élément tournant et lié en translation avec l'élément coulissant selon la direction de raccordement, l'élément coulissant étant guidé par un logement du bâti dans son mouvement de translation.
- L'élément coulissant comprend un arbre de verrouillage avec une portion de diamètre réduit et une extrémité évasée, une bague de verrouillage entoure l'arbre de verrouillage et loge des billes de verrouillage formant les organes de verrouillage, la bague de verrouillage étant mobile par rapport à l'arbre de verrouillage entre une position rétractée dans laquelle les billes de verrouillage sont aptes à venir dans leur première position déverrouillée, avec les billes de verrouillage coopérant avec la portion de diamètre réduit et étant en retrait de la surface radiale externe de la bague de verrouillage, et une position avancée dans laquelle les billes de verrouillage sont repoussées radialement par l'extrémité évasée dans leur deuxième position verrouillée, en saillie de la surface radiale externe de la bague de verrouillage, un ressort rappelant la bague de verrouillage vers sa position avancée.

L'invention concerne également un ensemble de plaques avec une première plaque multi-raccords telle que mentionnée ci-dessus et une deuxième plaque complémentaire, la deuxième plaque portant un élément de verrouillage délimitant un volume de réception adapté pour recevoir les organes de verrouillage, caractérisé en ce qu'en configuration accouplée de la plaque avec la plaque, les organes de verrouillage sont dans leur position verrouillée et engagés dans le volume de réception de l'élément de verrouillage et les éléments de raccord sont accouplés aux éléments de raccord complémentaires.

L'invention sera mieux comprise et d'autres avantages de celle-ci apparaitront plus clairement à la lumière de la description qui va suivre d'une plaque multi-raccords et d'un ensemble de plaques conformes à son principe, faite à titre d'exemple non limitatif et en référence aux dessins annexés dans lesquels :
- la figure 1 est une vue en perspective d'un ensemble de plaques conforme à l'invention, comprenant une plaque multi-raccords conforme à l'invention et une seconde plaque complémentaire, en configuration désaccouplée, la figure 1 représentant également une clé d'actionnement ;
- la figure 2 est une coupe transversale de la plaque multi-raccords de la figure 1 selon le plan ll-ll;
- la figure 3 est une coupe selon le plan III-III à la figure 2, de la plaque multi-raccords de la figure 1 engagée dans la seconde plaque complémentaire;
- la figure 4 est une coupe similaire à la figure 2, dans une configuration intermédiaire d'accouplement de la plaque multi-raccords, la plaque complémentaire étant omise;
- la figure 5 est une coupe similaire aux figures 2 et 4, dans une configuration accouplée de l'ensemble de plaques de la figure 1 ;
- la figure 6 est une coupe similaire à la figure 3, de l'ensemble de plaques en configuration accouplée ;
- la figure 7 est une vue en perspective de l'ensemble de plaques de la figure 1, en configuration accouplée ;
- la figure 8 est une coupe similaire à la figure 5, en cours d'une étape de déconnexion ;
- la figure 9 est une vue en perspective partiellement sectionnée d'une plaque multi-raccords conforme à un second mode de réalisation de l'invention dans une configuration intermédiaire d'accouplement;
- la figure 10 est une coupe de la plaque multi-raccords de la figure 9 selon le plan de coupe partielle de la figure 9 en configuration désaccouplée.

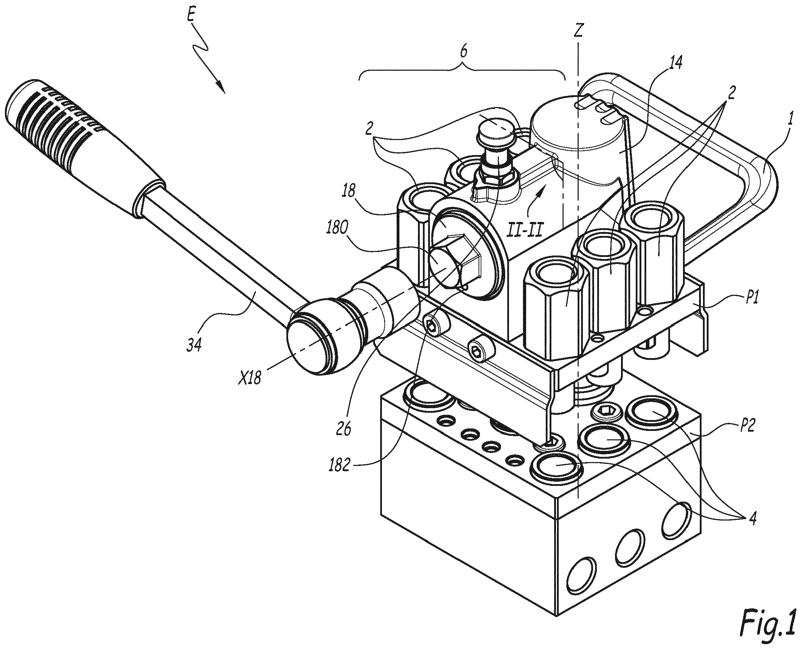

La figure 1 représente un ensemble de plaques E comprenant une première plaque P1 et une deuxième plaque complémentaire P2. La première plaque P1 comprend des éléments de raccord 2, chaque élément de raccord 2 étant disposé à l'extrémité d'une conduite de fluide ou d'électricité. La deuxième plaque P2 comprend des éléments de raccord 4 complémentaires des éléments de raccord 2, chaque élément de raccord 4 complémentaire étant disposé à l'extrémité d'une conduite de fluide ou d'électricité. Chaque élément de raccord 2 est destiné à être accouplé à un élément de raccord complémentaire 4 pour former un raccord R de type fluidique ou électrique en reliant leurs conduites respectives, non représentées. La première plaque P1 et la deuxième plaque P2 sont des plaques multi raccords pour le raccordement simultané de plusieurs raccords, au nombre de six dans l'exemple représenté.

Les plaques P1 et P2 s'étendent selon des plans perpendiculaires à une direction Z qui constitue également une direction de raccordement de la première plaque P1 avec la deuxième plaque P2. Cette direction de raccordement Z est la direction selon laquelle les plaques P1 et P2 sont rapprochées durant une opération de verrouillage et de raccordement. La direction Z est verticale dans cet exemple, mais peut être orientée différemment.

Dans la suite de la description, le terme « avant » désigne pour un élément de la plaque P1 un côté orienté vers la plaque P2 en regard, et le terme « arrière » le côté opposé par rapport à la plaque P2 en regard.

Les termes « axial » et « radial » sont employés pour désigner des surfaces d'un élément respectivement perpendiculaires ou entourant un axe central de référence de l'élément. Les termes « axialement » et « radialement » désignent une direction respectivement parallèle ou orthogonale à cet axe de référence.

Pour un élément considéré, les termes « interne » et « externe » désignent des parties ou surfaces orientées respectivement du côté d'un axe central de cet élément ou du côté opposé à l'axe central de cet élément.

Pour un élément considéré, les termes « circonférentiel » et « circonférentiellement » se rapportent à une partie, surface ou orientation s'étendant selon une direction de révolution autour d'un axe central de référence de cet élément.

La première plaque P1 est mobile par rapport à la deuxième plaque P2 complémentaire, qui est destinée à être fixée sur une machine, par exemple une presse à injecter. La première plaque P1 comprend notamment une poignée de manipulation 1 pour la prise en main de la plaque P1 par l'opérateur.

La première plaque P1 est équipée d'un dispositif de verrouillage 6, qui est adapté pour rapprocher la première plaque P1 de la deuxième plaque P2 selon la direction de raccordement Z, et pour verrouiller les deux plaques P1 et P2 en position accouplée des éléments de raccord 2 et 4. Lorsque les plaques P1 et P2 sont rapprochées et verrouillées, on raccorde simultanément tous les raccords portés par les première et deuxième plaques P1 et P2.

Les plaques P1 et P2 comprennent des éléments de guidage permettant de guider leur rapprochement. La plaque P1 comprend à cet effet un élément de guidage formé par une colonne cylindrique 8, s'étendant parallèlement à la direction de raccordement Z, et la deuxième plaque P2 comprend un élément de guidage formé par une douille cylindrique 10 s'étendant également parallèlement à la direction de raccordement Z. Le diamètre interne de la douille 10 est sensiblement égal au diamètre externe de la colonne 8, ce qui permet l'insertion à jeu réduit de la colonne 8 dans la douille 10 lors du rapprochement des plaques P1 et P2. En variante, la colonne 8 peut être portée par la deuxième plaque P2 et la douille 10 par la plaque P1.

La deuxième plaque P2 est équipée d'une douille de verrouillage 12 apte à coopérer avec le dispositif de verrouillage 6 pour le rapprochement et le verrouillage des plaques P1 et P2. La douille de verrouillage est centrée sur un axe Z12 parallèle à la direction Z en cours d'accouplement. La douille de verrouillage 12 est fixée sur la deuxième plaque P2, donc solidaire de la deuxième plaque P2, et comprend un alésage interne 120 et une partie resserrée 122 avec un diamètre interne rétréci, du côté de la première plaque P1 en cours d'accouplement. Le diamètre interne de l'alésage 120 est élargi par rapport à celui de la partie resserrée 122.

Le dispositif de verrouillage 6 comprend un bâti 14 et un mécanisme d'entraînement 16. Le bâti 14 est fixé sur la plaque P1 par des vis non représentées et est donc solidaire de la plaque P1, notamment dans la direction Z. Le mécanisme d'entraînement 16 comprend un élément tournant 18 qui est mobile en rotation par rapport au bâti 14 autour d'un axe longitudinal central X18 de l'élément tournant 18, perpendiculaire à la direction de raccordement Z. Cet élément tournant 18 est guidé dans sa rotation par rapport au bâti 14 selon l'axe X18 par un logement cylindrique 140 du bâti 14 centré sur l'axe X18.

L'élément tournant 18 comprend une saillie hexagonale 180 qui est coaxiale à l'axe X18 et qui s'étend hors du bâti 14 perpendiculairement à la direction de raccordement Z. Cette saillie hexagonale 180 permet qu'un outil 34 de type clé, ayant une forme hexagonale complémentaire, puisse être engagé par un opérateur autour de la saillie hexagonale 180 de manière à actionner le dispositif de verrouillage 6.

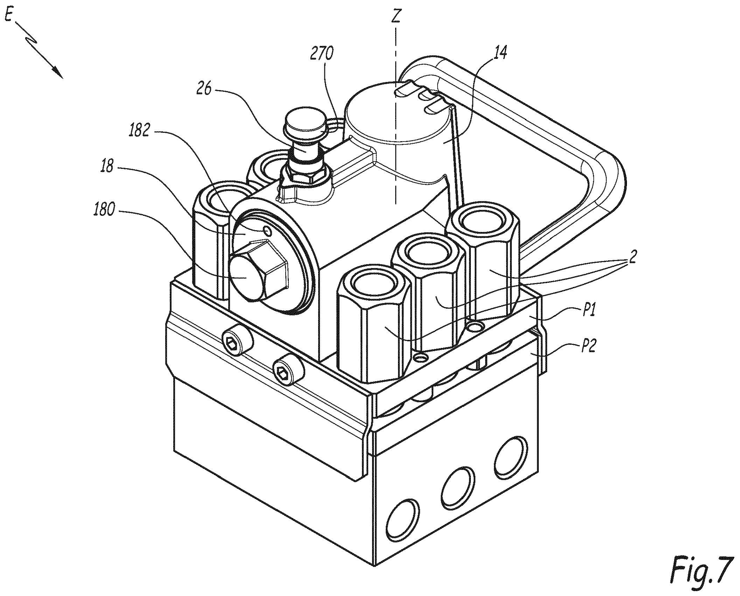

Comme cela est représenté aux figures 1 et 7, un repère visuel 182 est solidaire de l'élément tournant 18 pour repérer la position angulaire de l'élément tournant 18 autour de l'axe X18. Ce repère visuel 182 est visible depuis l'extérieur du bâti 14 autour de la saillie hexagonale 180.

Le mécanisme d'entraînement 16 comprend également un élément coulissant 20 qui est mobile en translation par rapport au bâti 14 selon un axe Z20 parallèle à la direction de raccordement Z.

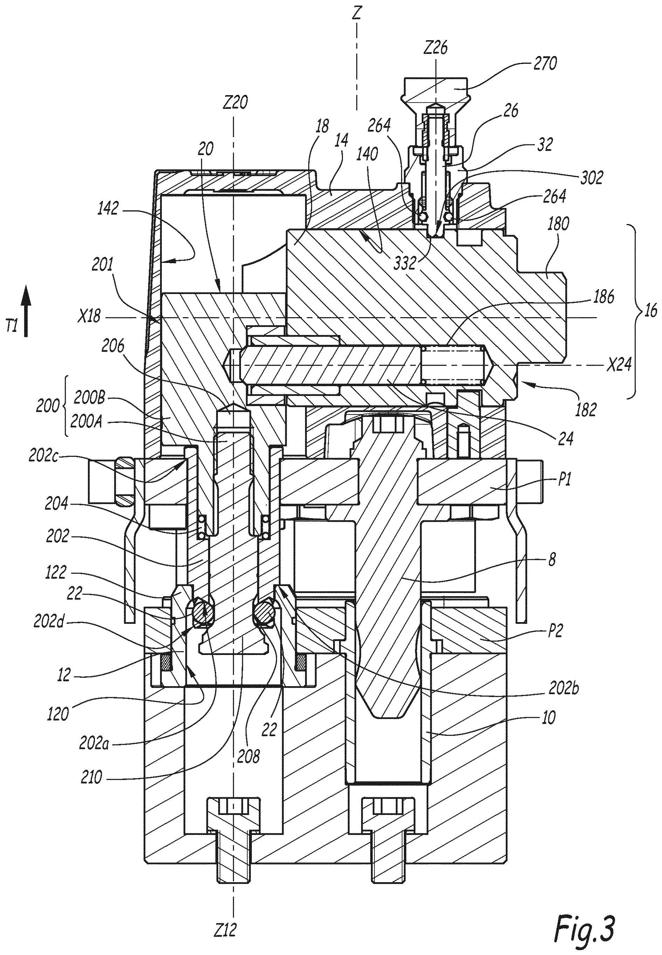

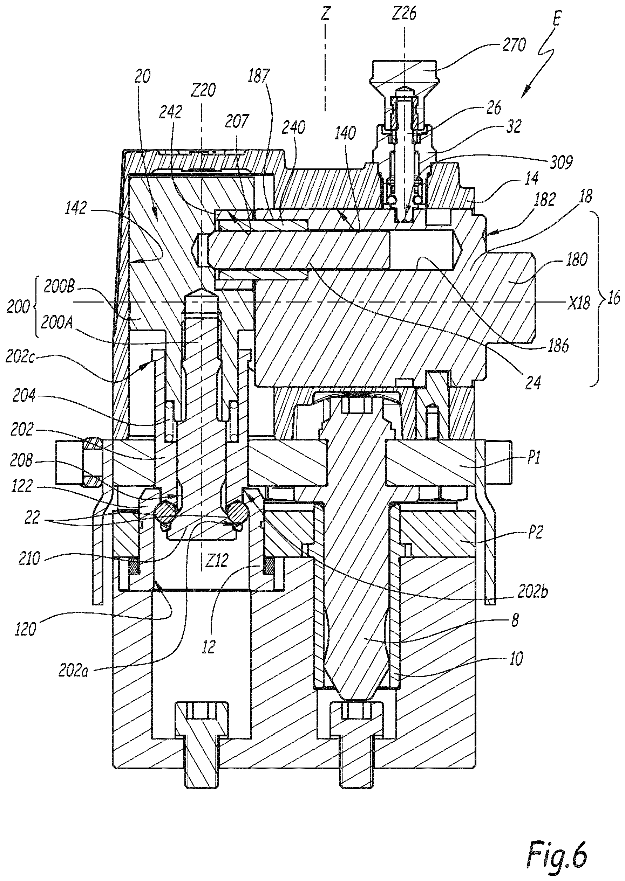

Le dispositif de verrouillage 6 comprend également des organes de verrouillage qui sont dans cet exemple formés par des billes 22, par exemple huit billes 22, l'élément coulissant 20 coopérant avec les billes de verrouillage 22 de manière que les billes de verrouillage 22 sont mobiles par rapport à l'élément coulissant 20, entre une première position déverrouillée rétractée, représentée à la figure 3, et une deuxième position verrouillée en saillie, représentée à la figure 6. Dans la première position déverrouillée, les billes de verrouillage 22 sont rétractées hors d'un volume d'accueil 23 disposé autour de l'élément coulissant 20 et destiné à recevoir partiellement la douille de verrouillage 12 de la deuxième plaque P2 et libèrent le passage de la douille 12 par rapport à l'élément coulissant 20 selon l'axe Z20. Dans cette configuration, l'élément coulissant 20 est libre de coulisser selon l'axe Z20 par rapport à la douille 12, en particulier dans la partie resserrée 122.

Dans leur deuxième position verrouillée, les billes de verrouillage 22 font saillie radialement dans le volume d'accueil 23 et lorsque la douille 12 est engagée dans le volume d'accueil 23, verrouillent la douille 12 avec l'élément coulissant 20 selon l'axe Z en formant un obstacle à la séparation de la première plaque P1 de la deuxième plaque P2 selon l'axe Z, car les billes de verrouillage 22 sont arrêtées par la partie de diamètre resserrée 122. Les billes de verrouillage 22 sont adaptées pour venir dans leur première position rétractée dans une configuration déverrouillée du dispositif de verrouillage 6 et désaccouplée de la plaque P2, qui permet l'insertion ou le retrait de l'élément coulissant 20 dans la douille de verrouillage 12.

L'élément coulissant 20 comprend un arbre de verrouillage 200. Une bague de verrouillage 202 entoure l'arbre de verrouillage 200 avec possibilité de déplacement axial relatif par rapport à l'arbre de verrouillage 200 selon l'axe Z20 qui est également un axe central longitudinal de la bague 202. La bague de verrouillage 202 loge les billes de verrouillage 22 grâce à des logements 202a traversants et inclinés par rapport à une direction perpendiculaire à l'axe Z20. Les logements 202a sont resserrés au niveau de leur débouché externe de manière à maintenir chacune des billes 22 dans son logement 202a. Un ressort 204 est interposé entre l'arbre de verrouillage 200 et la bague de verrouillage 202 et repousse la bague de verrouillage 202 vers une position avancée par rapport à l'arbre de verrouillage 200, représentée à la figure 6. A la figure 3, la bague de verrouillage 202 est dans une position arrière reculée par rapport à l'arbre de verrouillage 200, le ressort 204 étant davantage comprimé que lorsque la bague de verrouillage 202 est dans sa position avancée par rapport à l'arbre de verrouillage 200.

La bague de verrouillage 202 comprend un épaulement avant 202b apte à venir en butée axiale contre la douille de verrouillage 12 lors de l'accouplement selon l'axe Z, et un épaulement arrière 202c adapté pour venir en butée contre la plaque P1. L'épaulement avant 202b et une surface radiale externe 202d de la bague de verrouillage 202 délimitent le volume d'accueil 23 de la douille 12 autour de l'élément coulissant 20.

L'arbre de verrouillage 200 comprend une partie avant 200A et une partie arrière 200B. La partie avant 200A se situe du côté de la deuxième plaque P2 et est vissée dans un alésage 206 de la partie 200B. L'axe Z20 constitue un axe longitudinal central de la partie avant 200A. La partie 200B est mobile en translation selon l'axe Z20 par rapport au bâti 14 avec une surface externe cylindrique 201 de la partie 200B guidée dans un logement 142 cylindrique du bâti 14. La partie avant 200A comprend une portion de diamètre réduit 208, et une extrémité évasée 210. Dans la position reculée de la bague de verrouillage 202 par rapport à l'arbre de verrouillage 200, la portion de diamètre réduit 208 est alignée avec les débouchés internes des logements 202a, ce qui permet aux billes de verrouillage 22 d'atteindre leur position radiale interne rétractée, radialement en retrait de la surface radiale externe 202d. Lorsque la bague de verrouillage 202 atteint sa position avancée par rapport à l'arbre de verrouillage 200 sous l'action du ressort 204, l'extrémité évasée 210 repousse les billes de verrouillage 22 radialement vers l'extérieur, en référence à l'axe Z20, dans leur deuxième position radiale externe en saillie, dans laquelle elles dépassent radialement de la surface radiale externe 202d de la bague de verrouillage 202. Dans la position avancée de la bague de verrouillage 202 par rapport à l'arbre de verrouillage 200, le mouvement de la bague 202 vers l'avant selon la direction Z20 est arrêté par les billes 22 qui coopèrent radialement et axialement avec l'extrémité évasée 210 de l'arbre de verrouillage 200.

En configuration désaccouplée de la plaque P1, l'épaulement arrière 202c est en butée contre la première plaque P1 et la bague de verrouillage 202 est maintenue dans sa position reculée par rapport à l'arbre de verrouillage 200, qui est en position avancée par rapport au bâti 14.

Dans la position reculée de la bague de verrouillage 202 par rapport à l'arbre de verrouillage 200, les billes de verrouillage 22 coopèrent avec la portion de diamètre réduit 208 de la partie vissée 200A et peuvent se rétracter dans la bague de verrouillage 202 pour ne plus faire saillie radialement hors de la bague de verrouillage 202. Le diamètre de la surface radiale externe 202d de la bague de verrouillage 202, au niveau de chaque logement 202a des billes de verrouillage 22, est sensiblement égal, au jeu de fonctionnement près, au diamètre intérieur de la douille de verrouillage 12 dans sa partie resserrée 122. Ainsi lorsque les billes de verrouillage 22 sont en position déverrouillée, rétractées dans la bague de verrouillage 202, la bague de verrouillage 202 et l'arbre de verrouillage 200 peuvent être partiellement introduits dans l'alésage interne 120 de la douille de verrouillage 12.

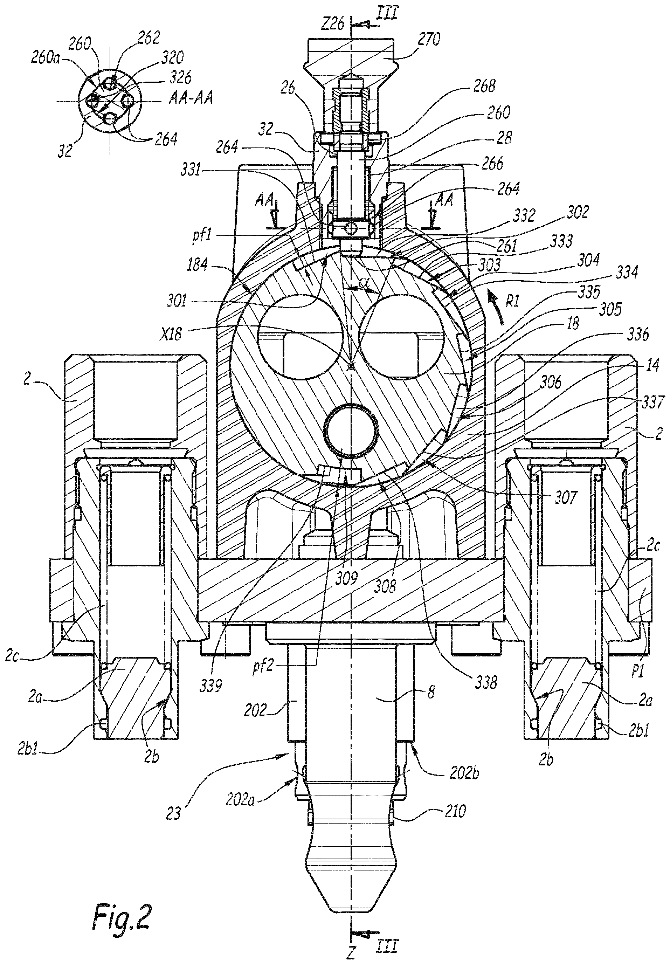

En configuration déverrouillée du dispositif de verrouillage 6 et désaccouplée de la plaque P1, dans laquelle les éléments de raccord 2 et 4 sont désaccouplés, la colonne de guidage 8 dépasse vers l'avant selon la direction de raccordement Z par rapport à l'arbre de verrouillage 200 qui est dans sa position avancée par rapport au bâti 14, ainsi que visible à la figure 2.

Dans l'exemple représenté, les éléments de raccord 2 et 4 sont des éléments de raccord fluidique. En configuration désaccouplée, une soupape 2a de chaque élément de raccord 2 est en position de fermeture contre un siège 2b avec un joint d'étanchéité 2b1 interposé entre la soupape 2a et le siège 2b, sous l'action de ressorts 2c. Cette configuration est représentée à la figure 2. Sur la deuxième plaque P2, les éléments de raccord 4 comprennent également chacun une soupape 4a qui est maintenue en position de fermeture étanche en configuration désaccouplée par un ressort 4b.

Le mécanisme d'entraînement 16 comprend également un ou des éléments de transformation du mouvement de rotation de l'élément tournant 18 autour de l'axe X18 en un mouvement de translation de l'élément coulissant 20 selon l'axe Z20. Dans l'exemple représenté, l'élément tournant 18 est solidaire en rotation autour de l'axe X18 d'un doigt de commande 24 dont l'axe longitudinal central X24 s'étend parallèlement à l'axe de rotation X18 et de façon décalée par rapport à cet axe X18. Le doigt de commande 24 est logé dans un logement 186 de l'élément tournant 18. Une bague de palier 240 montée autour du doigt de commande 24 et dans un logement 187 de l'élément tournant 18 est en prise dans un galet 242 glissant dans une encoche 207 de la partie 200B de l'arbre de verrouillage 200, transversale à l'axe Z20, selon une direction perpendiculaire au plan formé par les axes Z20 et X18. Comme l'arbre de verrouillage 200 est guidé selon l'axe de coulissement Z20 par le logement 142, le déplacement du doigt de commande 24 autour de l'axe X18 est transformé en un déplacement axial selon l'axe Z20 de la partie 200B et provoque l'entraînement de l'élément coulissant 20. Ainsi la position de l'élément tournant 18 dans le bâti 14 autour de l'axe X18 conditionne la position de la partie avant 200A et de la partie arrière 200B de l'élément coulissant 20 dans le bâti 14 selon l'axe Z20.

Conformément à l'invention, le dispositif de verrouillage 6 comprend également un cliquet 26. Le cliquet 26 est monté mobile dans un logement du bâti 14 et repoussé par un ressort 28 en direction de l'une de plusieurs encoches de cliquetage solidaires d'un élément du mécanisme d'entraînement 16 et juxtaposées dans la direction du mouvement par rapport au bâti 14 de l'élément du mécanisme d'entraînement 16 dont les encoches de cliquetage sont solidaires. Dans une configuration d'encliquetage, le cliquet 26 est monté mobile par rapport au bâti 14 selon un axe de coulissement Z26 tout en étant solidaire du bâti 14 dans une direction circonférentielle autour de l'axe X18. Dans cet exemple, les encoches de cliquetage sont prévues sur l'élément tournant 18 qui forme une roue à rochet ou une roue dentée. Les encoches de cliquetage sont ménagées en creux à partir d'une surface radiale externe 184 cylindrique de l'élément tournant 18 et sont donc juxtaposées selon une direction circonférentielle autour de l'axe X18.

Les encoches de cliquetage comprennent une encoche finale et au moins une encoche intermédiaire. Plus précisément, dans l'exemple représenté, les encoches de cliquetage 301 à 309 sont au nombre de neuf sur une amplitude angulaire de 200° autour de l'axe X18. En configuration d'encliquetage, le cliquet 26 est engagé dans l'une des encoches de cliquetage 301 à 309. Les encoches de cliquetage 301 à 308 sont réalisées avec un fond 331 à 338 plat, et la profondeur de chaque encoche de cliquetage 301 à 308, prise par rapport à la surface radiale externe 184 radialement à l'axe X18, est variable. Les encoches de cliquetage sont ainsi séparées les unes des autres par des déclivités formant des surfaces de butée 324 s'étendant chacune dans un plan passant par l'axe X18. La profondeur radiale maximale pf1 d'une encoche 301 à 308 se trouve au niveau de la surface de butée 324 en saillie par rapport au fond de l'encoche considérée tandis que la profondeur radiale de l'encoche diminue progressivement jusqu'à la surface de butée 324 en creux adjacente. L'encoche 301 peut être omise, l'encoche 302 formant l'encoche initiale. Les encoches 303 à 308 forment des encoches de cliquetage intermédiaires. La neuvième encoche dite encoche finale 309 est réalisée avec un fond 339 qui s'étend circonférentiellement à l'axe X18 et a une profondeur radiale pf2, prise par rapport à la surface radiale externe 184, radialement à l'axe X18, strictement supérieure à la profondeur radiale maximale pf1.

Le cliquet 26 est monté dans un logement 326 d'un bouchon 32 du bâti 14, vissé dans un logement du bâti 14 de manière que le logement 326 du bouchon 32 débouche dans le logement 140 et sur l'extérieur du dispositif de verrouillage 6. La direction de coulissement du cliquet 26 est de préférence radiale par rapport à l'axe de rotation X18 de l'élément tournant 18. L'axe de coulissement Z26 du cliquet 26 est de préférence parallèle à la direction de raccordement Z.

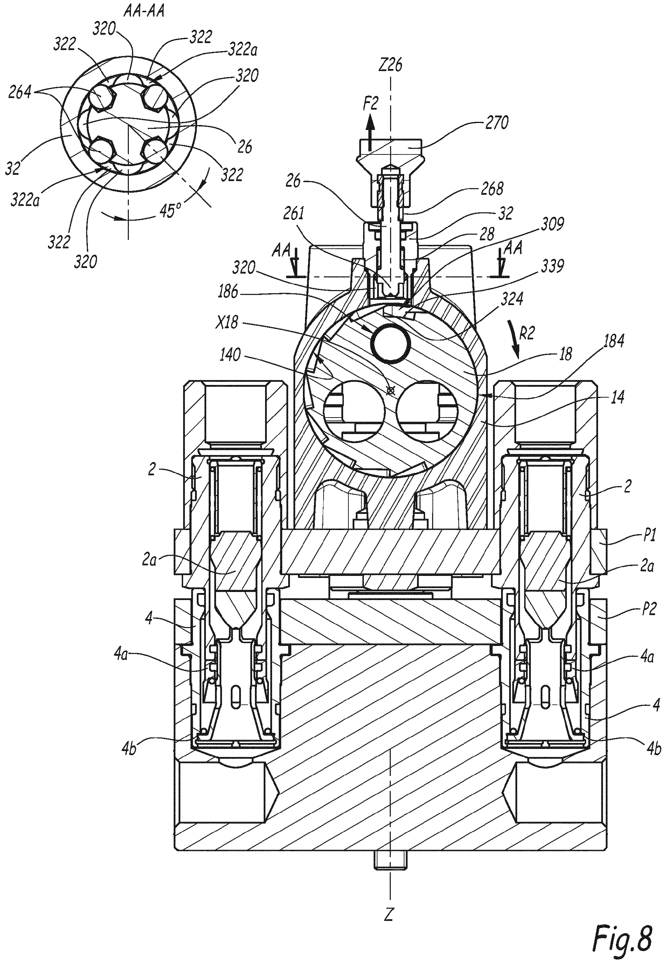

Le cliquet 26 comprend un corps 260 de révolution centré sur l'axe Z26 et muni de quatre logements 262 en portion de sphère visibles sur les coupes AA-AA des figures 2 et 8 et régulièrement répartis autour de l'axe Z26. Chacun de ces logements 262 accueille une bille de guidage 264, qui fait radialement saillie hors d'une surface radiale externe 260a du corps 260. Les billes de guidage 264 forment des pions du cliquet 26 qui coopèrent avec des rainures 320 du bouchon 32 qui sont prévues selon une direction longitudinale du bouchon 32 parallèle à l'axe du coulissement Z26. Les rainures 320 sont prévues sur la surface interne du logement 326, lui-même centré sur l'axe de coulissement Z26.

Le ressort 28 est engagé entre le bouchon 32 et un épaulement 266 du cliquet 26 qui porte les logements 262 de sorte que, lorsque les billes de guidage 264 sont engagées dans les rainures longitudinales 320, le cliquet 26 est rappelé élastiquement en direction de l'axe X18, au contact de l'élément tournant 18 et l'extrémité 261 du cliquet 26 coopère avec le fond 331-339 de l'une des neuf encoches 301 à 309.

Le cliquet 26 comprend également une bague 268 qui entoure le corps 260 et est solidaire du corps 260 dans la direction de l'axe de coulissement Z26. La bague 268 forme un marqueur visuel, par exemple de couleur et/ou de texture différente du corps 260 qui, selon la position du cliquet 26 selon son axe de coulissement Z26, est rendu partiellement visible de l'extérieur du dispositif de verrouillage 6 ou masqué par le bouchon 32.

Le cliquet 26 comprend enfin une tête 270 vissée sur le corps 260 et qui dépasse du bouchon 32 à l'extérieur du dispositif de verrouillage 6 de manière à être manipulable par un opérateur.

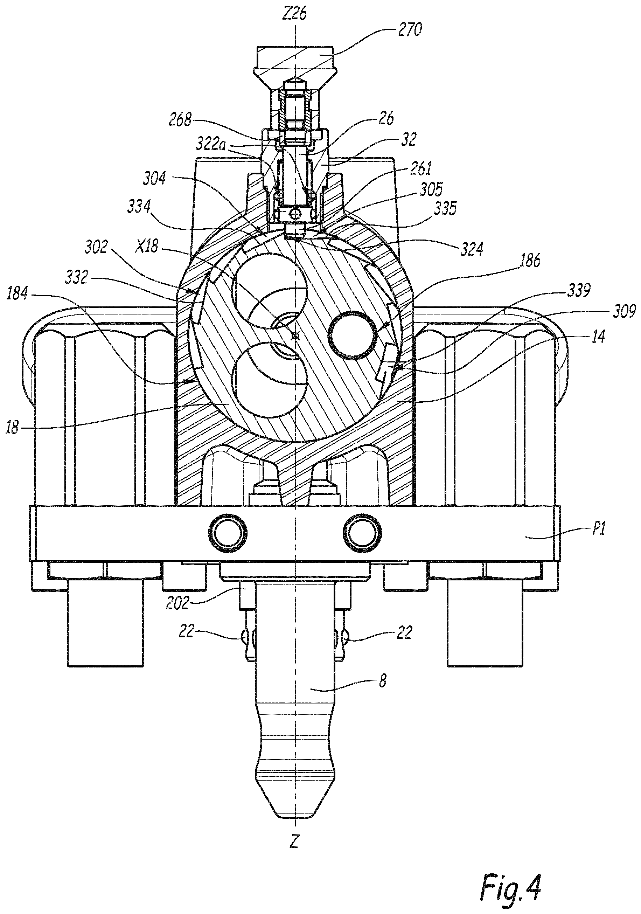

Le logement 326 du bouchon 32 forme en outre quatre encoches de maintien 322 qui s'étendent dans une même direction circonférentielle à l'axe Z26. Chacune des quatre encoches de maintien 322 s'étend entre deux rainures longitudinales 320 adjacentes. Les encoches de maintien 322 sont disposées autour de l'axe Z26 à l'extrémité des rainures longitudinales 320 située à l'opposé des encoches de cliquetage 301 à 309. Lorsque les billes de guidage 264 coopèrent avec les encoches de maintien 322, le cliquet 26 est en position de maintien, c'est-à-dire maintenu dans une position radiale externe en référence à l'axe X18, à l'encontre de l'effort du ressort 28 et dans laquelle l'extrémité 261 est rétractée hors du logement 140, et est dégagée des encoches de cliquetage 301 à 309, comme cela est représenté à la figure 8. Dans la position de maintien du cliquet 26, chaque bille de guidage 264 coopère avec une surface 322a, visible aux figures 4 et 8, de l'encoche de maintien 322 dans laquelle elle est engagée. Cette surface 322a de l'encoche de maintien 322 est interposée selon l'axe Z26 entre les billes de guidage 264 du cliquet 26 et l'élément tournant 18 avec encoches de cliquetage 301-309 et empêche le coulissement du cliquet 26 selon l'axe Z26 en direction des encoches de cliquetage 301-309.

Le passage des billes de guidage 264 depuis les rainures longitudinales 320 vers les encoches de maintien 322 nécessite de l'opérateur une traction sur la tête 270 du cliquet 26 selon l'axe de coulissement Z26 pour surmonter l'effort du ressort 28 et une rotation de 45° du cliquet 26 autour de l'axe de coulissement Z26, cette rotation étant indifféremment exercée dans un sens ou dans l'autre puisque chaque rainure longitudinale 320 débouche circonférentiellement sur deux encoches de maintien 322. Le passage des billes de guidage 264 depuis les encoches de maintien 322 vers les rainures longitudinales 320 nécessite de l'opérateur une simple rotation de 45° du cliquet 26 autour de l'axe de coulissement Z26, peu importe le sens de rotation. Ainsi, entre la position de maintien du cliquet 26 et la position du cliquet 26 en configuration d'encliquetage, le cliquet 26 a subi une rotation dans le bâti 14 autour de l'axe de coulissement Z26. Sur la coupe AA-AA du bouchon 32 et du cliquet 26 à la figure 8, le décalage de 45° entre les billes de guidage 264 et les rainures longitudinales 320 est visible.

Le fonctionnement de l'ensemble de plaques E est décrit dans la suite. En configuration désaccouplée de la première plaque P1, le cliquet 26 est en configuration d'encliquetage : les billes de guidage 264 sont engagées dans les rainures longitudinales 320 et l'extrémité 261 du cliquet 26 est engagée dans l'encoche de cliquetage initiale 302 (figure 2). Le cliquet 26 est rappelé élastiquement au contact du fond 332 de l'encoche de cliquetage 302 par le ressort 28. L'arbre de verrouillage 200 est en position avancée par rapport au bâti 14 le long de l'axe Z20. Lorsqu'il s'agit d'accoupler et de verrouiller les deux plaques P1 et P2 ensemble, la première plaque P1 est rapprochée de la deuxième plaque P2 le long de la direction de raccordement Z. Les éléments de guidage formés par la colonne 8 de la première plaque P1 s'engagent avec les éléments de guidage complémentaires formés par la douille 10 de la deuxième plaque P2 pour le guidage du rapprochement des plaques selon la direction de raccordement Z. L'arbre de verrouillage 200 s'engage ensuite dans la douille de verrouillage 12 et, lorsque les billes de verrouillage 22 parviennent au niveau de la douille de verrouillage 12, les billes de verrouillage 22 s'effacent à l'intérieur de la bague de verrouillage 202 en position déverrouillée sous l'action de la portion resserrée 122, et grâce à l'espace offert par la portion de diamètre réduit 208 de l'arbre de verrouillage 200 qui est alignée avec les débouchés internes des logements 202a dans cette configuration. La rétraction des billes de verrouillage 222 permet l'engagement de la bague de verrouillage 202 et des billes de verrouillage 22 dans la douille de verrouillage 12 dans l'alésage interne 120, en particulier au niveau de la partie de diamètre interne resserré 122 puis de l'alésage interne 120 de diamètre interne élargi.

La bague de verrouillage 202 parvient en butée contre la douille de verrouillage 12 au niveau de l'épaulement avant 202b (figure 3). A partir de cette configuration, le verrouillage et le rapprochement des plaques P1 et P2 peut être initié. Une clé 34 est mise en place par l'opérateur autour de la saillie hexagonale 180 et entraîne en rotation cette saillie hexagonale 180, et donc l'élément tournant 18, en rotation autour de l'axe X18. L'élément tournant 18 est mis en rotation sur une amplitude angulaire correspondant au moins à l'étendue angulaire autour de l'axe X18 de l'encoche de cliquetage 302 dans laquelle l'extrémité 261 du cliquet 26 est engagée. Les étendues angulaires des encoches de cliquetage 301 à 308 sont sensiblement identiques. L'amplitude de cliquetage du mécanisme d'entraînement 16 correspond à l'amplitude de mouvement de chaque élément du mécanisme d'entraînement 16 pour que le cliquet 26 s'engage dans l'encoche suivante. L'amplitude de cliquetage correspond à une rotation de l'élément tournant 18 sur l'étendue angulaire α de chaque encoche de cliquetage 301 à 308 soit une rotation de l'élément tournant 18 sensiblement égale à 30° ou bien comprise de préférence entre 20° et 40°. Cette rotation selon la flèche R1 à la figure 2 provoque le mouvement de l'arbre de verrouillage 200 vers sa position reculée dans le bâti 14, selon la flèche T1 de la figure 3. Lors de ce mouvement de rotation selon la flèche R1, le cliquet 26 est maintenu élastiquement au contact du fond 332 de l'encoche de cliquetage 302 par le ressort 28 et suit donc la géométrie du fond 332 de l'encoche 302 dans laquelle il est en prise. Du fait de la profondeur radiale variable de chacune des encoches de cliquetage 301 à 308, le cliquet 26 se déplace selon l'axe de coulissement Z26, à l'opposé de l'axe X18 vers l'extérieur, les billes de guidage 264 coulissant dans les rainures longitudinales 320 jusqu'à ce que le cliquet 26 s'engage dans l'encoche de cliquetage suivante 303, qui est la première encoche de cliquetage intermédiaire, et vienne au contact du fond 333 de cette encoche suivante 303 par coulissement du cliquet 26 sous l'effort du ressort 28. Dans cette configuration, nommée configuration intermédiaire, même si l'opérateur relâche l'action de la clé d'actionnement 34, le mouvement de rotation inverse de l'élément tournant 18 dans le sens opposé à la flèche R1, et donc le mouvement de l'arbre de verrouillage 200 par rapport au bâti 14, dans le sens opposé à la flèche T1, est limité par la mise en butée de l'extrémité 261 du cliquet 26 sur la surface de butée 324 séparant l'encoche de cliquetage 303 de l'encoche de cliquetage initiale précédente 302. Chaque surface de butée 324 de l'élément tournant 18 est orientée à l'opposé de la direction de mouvement de la flèche R1. Le cliquet 26 forme un obstacle à la surface de butée 324 de l'élément tournant 18 dans le mouvement de rotation de l'élément tournant 18 dans le sens opposé à la flèche R1. Le cliquet 26 limite le déplacement de l'arbre de verrouillage 200 vers sa position avancée à une position intermédiaire par rapport au bâti 14 entre sa position avancée de la configuration désaccouplée et sa position reculée de la configuration accouplée. La position intermédiaire est différente de la position avancée et de la position reculée. L'opérateur peut poursuivre la rotation de la clé 34 dans le sens de la flèche R1 ou bien ramener la clé 34 vers sa position de départ grâce à un système de clé à cliquet, alors que l'élément tournant 18 conserve sa position angulaire et que l'élément coulissant 20 conserve sa position intermédiaire, et de nouveau entraîner en rotation la saillie hexagonale 180 au moins sur une amplitude correspondant à l'amplitude de cliquetage, soit une rotation d'environ 30° de l'élément tournant 18, ce qui permet au cliquet 26 de s'engager dans l'encoche de cliquetage 304 suivante.

Le franchissement des encoches de cliquetage successives se poursuit. En particulier à la figure 4, représentant une configuration intermédiaire d'accouplement, le mouvement de rotation inverse de l'élément tournant 18 dans le sens opposé à la flèche R1 est empêché par la mise en butée de l'extrémité 261 du cliquet 26 sur la surface de butée 324 séparant l'encoche de cliquetage 305, dans laquelle le cliquet 26 est engagé, de l'encoche de cliquetage précédente 304. En cours d'accouplement, lorsque le cliquet 26 coulisse dans le logement 326 en configuration d'encliquetage, les billes de guidage 264 ne parviennent pas au niveau des encoches de maintien 322 le long de l'axe Z26. La position de maintien du cliquet 26 est donc décalée le long de l'axe Z26 par rapport aux positions prises par le cliquet 26 en configuration d'encliquetage.

Puis le cliquet 26 atteint l'encoche finale 309 et l'élément tournant 18 atteint une butée de limitation d'amplitude non représentée. Lorsque le cliquet 26 est en prise dans une encoche intermédiaire 303-308 et que l'extrémité 261 du cliquet 26 est en butée sur la surface de butée 324 en saillie du fond 333-338 de l'encoche intermédiaire 303-308, le cliquet 26 maintient l'arbre de verrouillage 200 dans une position intermédiaire et empêche l'arbre de verrouillage d'atteindre sa position avancée.

Depuis la configuration désaccouplée jusqu'à la configuration accouplée dans laquelle le cliquet 26 est en prise dans l'encoche finale 309, l'élément tournant 18 a subi une rotation de 180°, de préférence de 160° à 200°, selon la flèche R1, ce qui place le repère visuel 182 à une position décalée de 180° par rapport à sa position initiale, ce qui permet à l'opérateur de visualiser la fin de course du dispositif de verrouillage 6. Le repère visuel 182 est visible par l'opérateur même lorsque la clé 34 est engagée sur la saillie hexagonale 180.

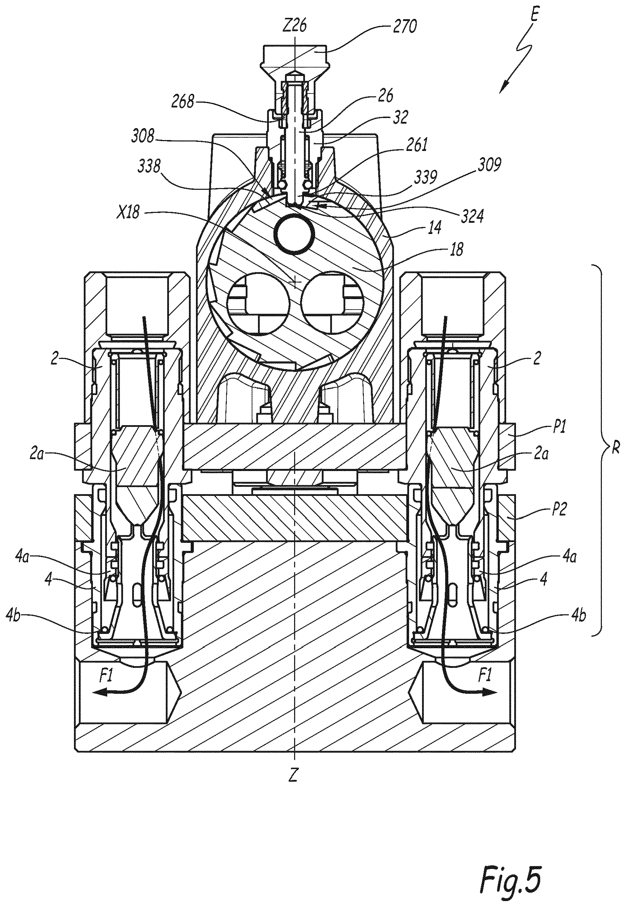

En outre, lorsque le cliquet 26 coopère avec l'encoche initiale 302 et lors du mouvement du cliquet 26 dans les encoches de cliquetage intermédiaires 303 à 308, la bague colorée formant le marqueur visuel 268 reste visible par l'opérateur car seulement partiellement masquée par le bouchon 32. En configuration accouplée de la plaque P1, le cliquet 26 est en configuration d'encliquetage en prise dans l'encoche finale 309 (figure 5) et au contact du fond 339. Du fait de la différence de profondeur entre la profondeur radiale pf2 de l'encoche finale 309 et la profondeur radiale maximale pf1 des encoches 301 à 308, l'extrémité 261 du cliquet 26 est plus proche de l'axe X18 et la bague colorée 268 est complètement masquée par le bouchon 32. Cela indique à l'opérateur que l'encoche finale 309 a été atteinte et que la configuration verrouillée accouplée est obtenue.

Entre la configuration désaccouplée et la configuration accouplée, l'élément tournant 18 a entraîné le doigt de commande 24 en rotation autour de l'axe X18, le galet 242 en translation selon l'axe Z20 qui a lui-même entraîné le coulissement de l'arbre de verrouillage 200 le long de l'axe Z20 depuis sa position avancée par rapport au bâti 14 (figure 3) à sa position reculée par rapport au bâti 14 (figure 6). L'arbre de verrouillage 200 se déplace alors relativement à la bague de verrouillage 202 qui est repoussée élastiquement vers sa position avancée. Dans la position avancée de la bague de verrouillage 202 par rapport à l'arbre de verrouillage 200, les billes de verrouillage 22 coopèrent avec l'extrémité évasée 210 et sont repoussées en position verrouillée, en saillie partiellement au-delà de la surface radiale externe 202d. Les billes de verrouillage 22 sont engagées dans l'alésage interne 120 et forment alors un obstacle liant la douille de verrouillage 12 et la partie vissée 200A de l'arbre de verrouillage 200 selon l'axe Z20. En effet, les billes de verrouillage 22 résistent à un effort d'éloignement des plaques P1 et P2 et transmettent à la douille de verrouillage 12 le mouvement de l'arbre de verrouillage 200 vers sa position reculée. De manière avantageuse mais optionnelle, la rotation de l'élément tournant 18 permettant l'engagement du cliquet 26 depuis l'encoche initiale 302 dans la première encoche intermédiaire 303, adjacente à l'encoche initiale 302, ou dans la deuxième encoche intermédiaire 304, adjacente à la première encoche intermédiaire 303, déplace l'arbre de verrouillage 200 par rapport à la bague de verrouillage 202 dans une position relative telle que les billes de verrouillage 22 coopèrent avec l'extrémité évasée 210 et font saillie vers l'extérieur de la bague de verrouillage 202 en position verrouillée pour former obstacle à la séparation des plaques P1 et P2 avec la partie resserrée 122 de la douille de verrouillage 12. Ainsi les billes de verrouillage 22 sont maintenues en position verrouillée et les plaques P1 et P2 ne peuvent plus être séparées dès lors que l'opération d'accouplement a été engagée et que le cliquet 26 a atteint la première encoche intermédiaire 303 ou la deuxième encoche intermédiaire 304. De préférence, en cours d'accouplement, les billes de verrouillage 22 sont en position verrouillée dès que le cliquet 26 a atteint la première encoche intermédiaire 303.

La poursuite du mouvement de l'arbre de verrouillage 200 dans le bâti 14 lors de la rotation de l'élément tournant 18 pour la connexion provoque un mouvement de rapprochement des deux plaques P1 et P2 car l'arbre de verrouillage 200 est lié selon l'axe Z20 à la douille de verrouillage 12 par les billes de verrouillage 22, et donc à la deuxième plaque P2. La bague de verrouillage 202, repoussée par le ressort 204 en position avancée, suit le mouvement de l'arbre de verrouillage 200 dans le bâti 14, les billes 22 restent maintenues en position verrouillée. Pendant le rapprochement des plaques P1 et P2, les éléments de raccord 2 viennent coopérer avec les éléments de raccord 4 complémentaires de la plaque P2, l'étanchéité est prise entre un élément de raccord 2 et un élément de raccord complémentaire 4, les soupapes 2a et 4a sont repoussées permettant la connexion et l'ouverture des conduites fluidiques raccordées aux éléments de raccord 2 et 4. En configuration accouplée des plaques, les plaques P1 et P2 sont dans une position relative dans laquelle les éléments de raccord 2 sont accouplés aux éléments de raccord intermédiaires 4, avec ouverture des soupapes 2a et 4a et donc une communication fluidique dans les raccords R formés par les éléments de raccord 2 et les éléments de raccord complémentaires 4 accouplés. Les éléments de raccord 2 et 4 sont en butée axiale les uns contre les autres. Dans cette configuration, l'écoulement de fluide a lieu entre les éléments de raccord 2 et les éléments de raccord 4 selon les flèches F1 ou dans le sens inverse selon l'application.

La plaque P1 atteint sa configuration accouplée lorsque le cliquet 26 est en prise dans l'encoche finale 309. Dans cette configuration accouplée, l'arbre de verrouillage 200 est en position reculée par rapport au bâti 14 et le cliquet 26 limite la rotation de l'élément tournant 18, et donc le mouvement de l'arbre de verrouillage 200 par rapport au bâti 14, dans le sens du déverrouillage, par mise en butée de l'extrémité 261 du cliquet 26 contre la surface de butée 324 séparant l'encoche finale 309 de l'encoche intermédiaire précédente 308. L'arbre de verrouillage 200 est maintenu dans sa position reculée par le cliquet 26. Autrement dit, le cliquet 26 maintient l'élément coulissant 20 dans une position par rapport au bâti 14 compatible avec l'accouplement des raccords R et l'écoulement de fluide entre les éléments de raccord 2 et les éléments de raccord 4. Les efforts de rappel des soupapes 2a et 4a en position fermée exercés par les ressorts 2c et 4b tendent à éloigner les deux plaques P1 et P2 mais ne peuvent les séparer puisque le cliquet 26 maintient la position angulaire de l'élément tournant 18 ainsi que la position reculée de l'arbre de verrouillage 200 par rapport au bâti 14 en l'empêchant d'atteindre une position intermédiaire ou sa position avancée.

Pour la déconnexion, l'opérateur doit libérer l'élément tournant 18 pour son déplacement angulaire dans la direction inverse de la flèche R1, et donc placer le cliquet 26 en position de maintien avec les billes de guidage 264 dans les encoches de maintien 322. Pour cela, il exerce sur la tête 270 du cliquet 26 un effort de traction selon l'axe Z26 selon la flèche F2 à la figure 8 à l'encontre de l'effort du ressort 28, jusqu'à mettre les billes de guidage 264 en butée contre l'extrémité des rainures longitudinales 320, puis il exerce une rotation de 45° du cliquet 26 autour de l'axe Z26. Les billes de guidage 264 s'engagent alors dans les encoches de maintien 322 et, lorsque le cliquet 26 est relâché par l'opérateur, les billes de guidage 264 restent engagées dans les encoches de maintien 322, en contact avec les surfaces 322a des encoches de maintien 322 sous l'effort du rappel du ressort 28. Le cliquet 26 conserve alors sa position radiale externe de la figure 8 dans laquelle il est dégagé radialement de toutes les encoches de cliquetage 301 à 309 de l'élément tournant 18, l'extrémité 261 ne formant plus obstacle aux surfaces de butée 324 de l'élément tournant et ne s'opposant pas à la rotation de l'élément tournant 18 autour de l'axe X18 dans le sens de la déconnexion, selon la flèche R2. La bague 268 est de nouveau visible.

L'opérateur engage alors la clé 34 sur la saillie hexagonale 180 et entraîne l'élément tournant 18 dans le sens de la déconnexion depuis la configuration accouplée jusqu'à la configuration désaccouplée par une rotation à 180° de la clé 34 ou bien par des rotations successives de faible amplitude, de l'ordre de 30°.

Les efforts de répulsion des soupapes 2a et 4a participent au déplacement des plaques P1 et P2 dans le sens de la séparation. Lors de la rotation de l'élément tournant 18 dans le sens de la déconnexion, l'arbre de verrouillage 200, entraîné par le doigt de commande 24, est déplacé dans le bâti 14 vers sa position avancée. La plaque P2 suit le déplacement de l'arbre de verrouillage 200 selon l'axe Z20, ce qui entraîne l'éloignement des plaques P1 et P2, et les éléments de raccord 2 sont dégagés des éléments de raccord complémentaires 4, les soupapes 2a et 4a se refermant de manière étanche et interrompant la circulation de fluide.

L'éloignement des plaques P1 et P2 se poursuit jusqu'à ce que la première plaque P1 ne puisse plus s'éloigner de la deuxième plaque P2 avec la mise en contact de l'épaulement arrière 202c de la bague de verrouillage 200 contre la plaque P1. Alors la poursuite du déplacement de l'arbre de verrouillage 200 par rapport au bâti 14 vers sa position avancée provoque le déplacement relatif de la bague de verrouillage 202 et de l'arbre de verrouillage 200, la bague de verrouillage 202 adoptant sa position reculée dans laquelle les billes de verrouillage 22 peuvent s'effacer dans la bague de verrouillage 202 et dans la portion de diamètre réduit 208. L'élément tournant 18 atteint une butée de limitation d'amplitude non représentée. L'opérateur saisit la poignée 1 et éloigne la plaque P1 de la plaque P2. Sous l'action de la partie resserrée 122, les billes de verrouillage 22 se rétractent dans la bague de verrouillage 202 en position déverrouillée et sont libérées de la douille de verrouillage 12. Parallèlement, les éléments de guidage 8 et 10 cessent leur coopération et les deux plaques P1 et P2 sont séparées.

Pour permettre une nouvelle connexion, le cliquet 26 doit être replacé par l'opérateur en configuration d'encliquetage en engagement avec l'encoche initiale 302. Pour cela l'opérateur tourne le cliquet de 45° autour de son axe de coulissement Z26 afin de libérer les billes de guidage 264 des encoches de maintien 322 et d'engager les billes de guidage 264 dans les rainures longitudinales 320. Sous l'action du ressort 28, l'extrémité 261 du cliquet 26 vient à nouveau au contact de l'élément tournant 18, au contact du fond 332 de l'encoche 302. La butée de limitation d'amplitude de l'élément tournant 18 en configuration désaccouplée a en effet placé l'encoche initiale 302 face au logement 326 et à l'extrémité 261 du cliquet 26.

La plaque multi-raccords P1 selon l'invention permet les avantages suivants. Le dispositif de verrouillage 6 avec cliquet 26 ne nécessite qu'une faible amplitude de rotations successives avec une clé 34, pour arriver à la configuration accouplée, malgré les efforts de répulsion des soupapes 2a et 4a. Cela est particulièrement adapté aux plaques avec accès limité ou aux efforts de répulsion élevés puisque l'effort à fournir peut être relâché après chaque rotation successive, la rotation de l'élément tournant 18 dans le sens de la déconnexion étant empêchée par la coopération du cliquet 26 avec l'une des surfaces de butée 324 délimitant les encoches de cliquetage. L'amplitude de cliquetage du mécanisme d'entraînement 16, et donc le nombre d'encoches de cliquetage intermédiaires sur l'amplitude maximale de mouvement de l'élément tournant 18 entre la configuration désaccouplée et la configuration accouplée, peuvent être adaptés selon le type d'application.

Le cliquet 26 qu'on peut positionner et maintenir en position de maintien grâce aux pions 264 permet une déconnexion ergonomique, car il n'est pas nécessaire pour l'opérateur de maintenir le cliquet 26 en position radiale externe de maintien pendant la rotation de déverrouillage de l'élément tournant 18. L'utilisation de pions sous forme de billes 264 permet un guidage amélioré du mouvement du cliquet 26 dans les rainures longitudinales 320 et vers ou depuis les encoches de maintien 322.

Le cliquet 26 mobile radialement par rapport à l'axe de rotation X18 rend le dispositif de verrouillage 6 compact le long de l'axe X18.

Le cliquet 26 mobile parallèlement à la direction de raccordement Z permet de ménager l'accès à la tête 270 du cliquet 26 dans la même zone que la poignée 1 pour la mise en place de la première plaque P1 sur la deuxième plaque P2, ce qui est recommandé en cas d'accès limité aux plaques P1 et P2.

La différence entre la profondeur maximale des encoches 301 à 308 et la profondeur de l'encoche finale 309 de l'élément tournant 18 permet de marquer visuellement la position du cliquet 26 en configuration accouplée des plaques P1 et P2.

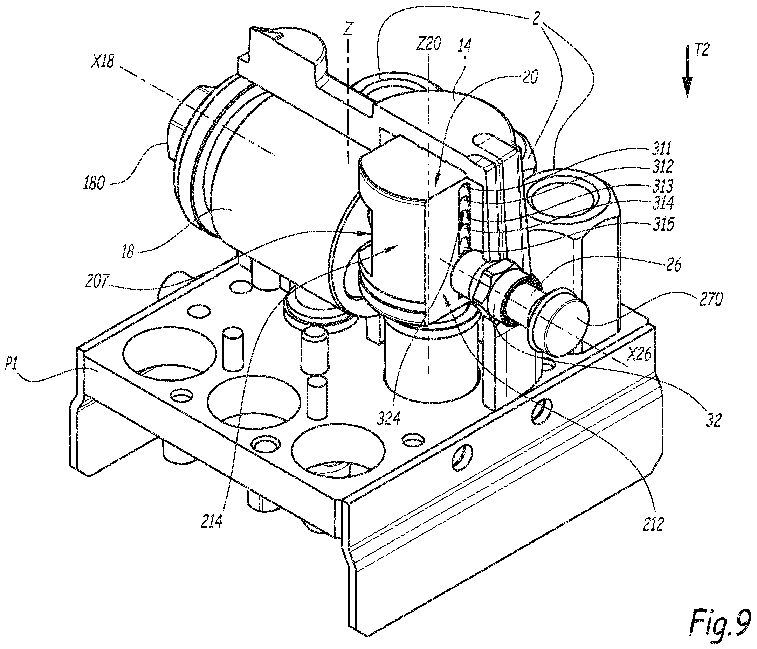

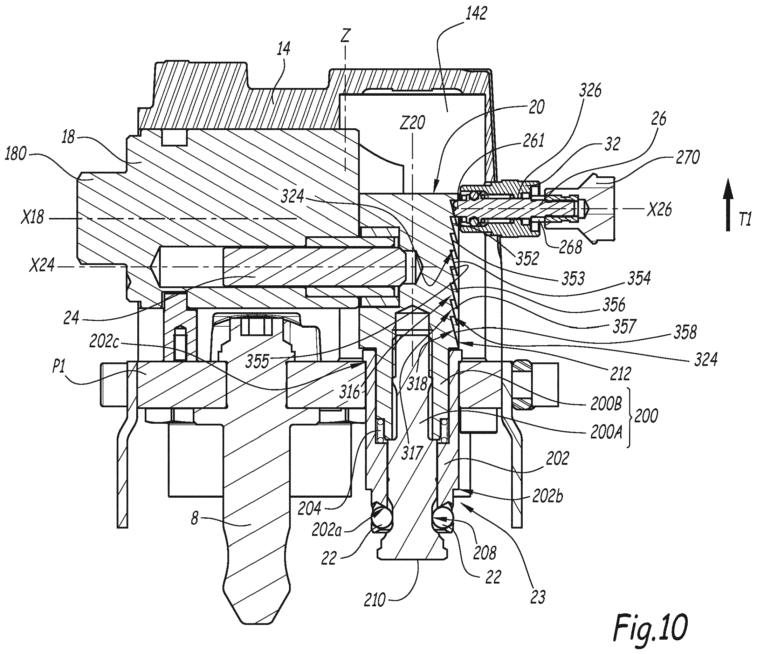

Un second mode de réalisation de l'invention est représenté sur les figures 9 et 10. Dans ce mode de réalisation, les éléments communs au premier mode portent les mêmes références et fonctionnent de la même manière. Seules les différences par rapport au premier mode de réalisation sont détaillées ci-après. La figure 9 illustre trois éléments de raccord 2 destinés à être raccordés à trois éléments de raccord complémentaires non représentés et portés par la deuxième plaque pour former les raccords.

Dans le mode de réalisation des figures 9 et 10, le dispositif de verrouillage 6 comprend des encoches de cliquetage 311 à 318 formées non pas sur la surface externe de l'élément tournant 18, mais sur un autre élément du mécanisme d'entraînement 16 formé par l'élément coulissant 20. Les encoches de cliquetage 311 à 318 sont formées en creux sur une surface externe 212 de l'arbre de verrouillage 200, précisément de la partie arrière 200B, qui est plane, disposée du côté opposé à l'élément tournant 18 par rapport l'axe Z20 et perpendiculaire au plan formé par l'axe Z20 et l'axe X18. Les encoches de cliquetage 311 à 318 sont alors juxtaposées de façon rectiligne selon l'axe de coulissement Z20 de l'arbre de verrouillage 200, qui est parallèle à la direction de raccordement Z. Les encoches de cliquetage 311 à 318 sont donc solidaires du mouvement en translation de l'arbre de verrouillage 200. En configuration désaccouplée de la plaque P1, l'extrémité 261 du cliquet 26 est engagée dans l'encoche initiale 311 et l'arbre de verrouillage 200 est en position avancée par rapport au bâti 14, comme l'illustre la figure 10. En configuration accouplée de la plaque P1, l'extrémité 261 du cliquet 26 est engagée dans l'encoche finale 318 et l'arbre de verrouillage 200 est en position reculée par rapport au bâti 14. Entre la configuration désaccouplée et la configuration accouplée de la plaque P1, l'élément tournant 18 a subi une rotation qui a provoqué le mouvement de l'arbre de verrouillage 200 selon la flèche T1 de la figure 10.

Le mouvement de translation de l'élément coulissant 20 dans le bâti est guidé par un logement 142 cylindrique qui coopère avec deux surfaces latérales 214 en portion de cylindre de l'arbre de verrouillage 200.

Dans ce cas, le cliquet 26 coulisse dans un logement 326 du bâti 14 selon un axe de coulissement X26 parallèle à l'axe de rotation X18 de l'élément tournant 18 mais est solidaire du bâti 14 le long de l'axe de coulissement Z20. L'axe de coulissement X26 est transversal, en particulier orthogonal, à la direction de mouvement de l'élément 20 du mécanisme d'entraînement 16 dont les encoches de cliquetage 311-318 sont solidaires. Le même dispositif de coopération entre une surface du bâti 14 et le cliquet 26 selon l'axe X26 pour maintenir le cliquet 26 en position de maintien dégagé hors des encoches de cliquetage 311 à 318 à la déconnexion est prévu. Chaque encoche de cliquetage 311 à 317 prévue sur l'arbre de verrouillage 200 s'étend sur une longueur, le long de l'axe Z20, correspondant à la course parcourue par l'arbre de verrouillage 200 par rapport au bâti 14 lors d'une rotation de l'élément tournant 18 autour de l'axe X18 d'une amplitude correspondant à l'amplitude de cliquetage du mécanisme d'entraînement 16, soit d'une rotation de 30° environ de l'élément tournant 18 ou, plus généralement, à une amplitude de déplacement de la clé 34 correspondant à une rotation de 30° ou bien à une rotation comprise entre 20° et 40° de l'élément tournant 18. La rotation de l'élément tournant 18 sur une amplitude correspondant à l'une amplitude de cliquetage permet au cliquet 26 d'atteindre l'encoche de cliquetage suivante 312-317 jusqu'à l'encoche finale 318.

De la même façon que dans le premier mode de réalisation, chaque encoche de cliquetage intermédiaire 312-317 et finale 318 est délimitée par un fond respectif 352 à 357 et 358 et une surface de butée 324 en saillie par rapport au fond 352-358 de l'encoche de cliquetage considérée. Chaque surface de butée 324 s'étend perpendiculairement à l'axe Z20 et est orientée à l'opposé de la direction de mouvement de la flèche T1. Lorsque le cliquet 26 coopère avec la surface de butée 324, le cliquet 26 forme obstacle à l'arbre de verrouillage 200 dans un mouvement dans le sens de la déconnexion dirigé selon la flèche T2 de la figure 9, opposée à la flèche T1, et bloque le mouvement de l'arbre de verrouillage 200 vers sa position avancée et donc la rotation de l'élément tournant 18 dans le sens de la déconnexion.

En configuration intermédiaire, lorsque le cliquet 26 est engagé dans une encoche intermédiaire 312-317, le cliquet 26 limite le déplacement de l'élément coulissant 20 dans le bâti 14 à une position intermédiaire entre sa position avancée et sa position reculée.

En configuration accouplée, lorsque le cliquet 26 est engagé dans l'encoche finale 318, le cliquet 26 limite le déplacement de l'élément coulissant 20 vers sa position avancée et maintient l'arbre de verrouillage 200 dans sa position reculée. Autrement dit, le cliquet 26 maintient l'élément coulissant 20 dans une position par rapport au bâti 14 compatible avec l'accouplement des raccords et l'écoulement de fluide entre les éléments de raccord 2 et les éléments de raccord complémentaires.

De façon non représentée, de la même façon que dans le premier mode de réalisation, la profondeur de l'encoche finale 318, prise parallèlement à l'axe X26 et par rapport à la surface externe 212, peut être supérieure à la profondeur des encoches initiales et intermédiaires 311 à 317 afin de permettre un masquage du marqueur visuel 268 porté par le cliquet 26 en configuration accouplée et verrouillée.

Selon des modes de réalisation non représentés :
- le cliquet 26 peut avoir un axe de coulissement radial par rapport à l'axe de rotation X18 de l'élément tournant 18, mais non parallèle à la direction de raccordement Z. Par exemple, l'axe de coulissement du cliquet 26 peut être orthogonal à l'axe X18 et à la direction Z.
- le cliquet 26 peut avoir un axe de coulissement parallèle à l'axe de rotation X18 de l'élément tournant 18, et les encoches de cliquetage être formées sur une surface axiale de l'élément tournant 18, c'est-à-dire sur une surface perpendiculaire à l'axe de rotation X18, et non une surface radiale, c'est-à-dire entourant l'axe X18, comme c'est le cas dans le premier mode de réalisation. Les encoches de cliquetage sont alors juxtaposées selon une direction circonférentielle autour de l'axe de rotation de l'élément tournant 18.

- le dispositif de verrouillage ne comporte pas d'encoche de cliquetage initiale, le cliquet 26 étant au contact de la surface externe 184 ou 212 en configuration désaccouplée.
- l'élément tournant 18 peut être équipé sur une surface radiale externe d'encoches de cliquetage juxtaposées selon une direction circonférentielle autour de l'axe de rotation de l'élément tournant 18 et une extrémité de cliquet monté dans un logement du bâti 14 avec possibilité de rotation par rapport au bâti 14 autour d'un axe parallèle à l'axe de rotation X18 de l'élément tournant 18 est rappelée élastiquement en coopération avec l'une des encoches de cliquetage. Pour placer le cliquet en position de maintien, il faut alors exercer un effort de rotation sur le cliquet qui dégage l'extrémité du cliquet hors des encoches de cliquetage.
- le ou les pions 264 du cliquet 26 en saillie de la surface externe du corps 260 peuvent avoir une forme autre que la géométrie sphérique décrite, par exemple cylindrique. Ce ou ces pions peuvent être monoblocs avec le corps 260.- Des pions peuvent être formés en saillie du logement interne 326 du bouchon 32 et coopérer avec des rainures longitudinales et des encoches de maintien formées sur la surface radiale externe du corps 260. Lorsque les pions coopèrent avec les encoches de maintien du corps 260, le cliquet 26 est maintenu en position de maintien ; lorsque les pions coopèrent avec les rainures longitudinales du corps 260, le cliquet 26 est repoussé élastiquement en engagement dans l'une des encoches de cliquetage.
- le dispositif de verrouillage 6 peut être équipé d'un arbre de verrouillage 200 parallèle à l'axe de rotation X18 de l'élément tournant 18, selon un principe similaire à JPH 07 208 673. Les éléments de transformation du mouvement de rotation de l'élément tournant 18 en mouvement de translation de l'élément coulissant 20 comprennent alors un galet et un profil de came.
- le dispositif de verrouillage 6 peut comprendre des organes de verrouillage qui sont mobiles par rapport à l'axe Z20 et coopèrent avec l'arbre de verrouillage 200 en étant logés dans un logement traversant dans l'arbre de verrouillage 200 et l'arbre de verrouillage 200 reçoit, dans un volume d'accueil interne, un axe de verrouillage de la deuxième plaque P2 muni d'une encoche circonférentielle externe de réception des organes de verrouillage, selon un principe similaire à US 8 864 179.
- les plaques P1 et P2 peuvent porter des éléments de raccord électrique. Les plaques P1 et P2 peuvent incorporer des raccords électriques, des raccords fluidiques ou bien des combinaisons de raccords fluidiques et électriques. Plusieurs éléments de raccord portés par la plaque P1 sont raccordés aux éléments de raccord complémentaires par le rapprochement des deux plaques P1 et P2.
- les organes de verrouillage peuvent être autres que des billes, par exemple des doigts de verrouillage, des segments de verrouillage.
- le profil de prise formé par la saillie hexagonale 180 peut être formé par une saillie d'une autre géométrie, par exemple carrée ou triangulaire, ou par une empreinte, par exemple de type hexagonale, étoile à 6 branches, carrée, triangulaire, ménagée en creux dans l'élément tournant et accessible depuis l'extérieur du bâti 14.

## Revendications

1. Plaque multi-raccords (P1) pour le raccordement simultané de plusieurs raccords (R) de type fluidique et/ou électrique, la plaque (P1) comportant un dispositif de verrouillage (6) selon une direction de raccordement (Z) d'éléments de raccord (2) portés par la plaque (P1) à des éléments de raccord (4) complémentaires portés par une deuxième plaque (P2), le dispositif de verrouillage (6) comprenant un bâti (14) fixe sur la plaque (P1), des organes de verrouillage (22) et un mécanisme d'entraînement (16), le mécanisme d'entraînement (16) comprenant :
- un élément tournant (18) mobile en rotation dans le bâti (14), entre une configuration désaccouplée et une configuration accouplée de la plaque (P1),
- un élément coulissant (20) mobile en translation par rapport au bâti (14) selon la direction de raccordement (Z) et qui coopère avec les organes de verrouillage (22), les organes de verrouillage (22) étant mobiles par rapport à l'élément coulissant (20) entre une première position déverrouillée où ils libèrent un passage pour la deuxième plaque (P2) par rapport à l'élément coulissant (20), et une deuxième position verrouillée où ils sont aptes à solidariser l'élément coulissant (20) et la deuxième plaque (P2) selon la direction de raccordement (Z),
- un ou des éléments de transformation (24) du mouvement de rotation de l'élément tournant (18) en mouvement de translation de l'élément coulissant (20),
dans la configuration désaccouplée, l'élément coulissant (20) est dans une position avancée par rapport au bâti (14) et les organes de verrouillage (22) sont aptes à venir dans leur première position déverrouillée,
dans la configuration accouplée, l'élément coulissant (20) est dans une position reculée par rapport au bâti (14) et les organes de verrouillage (22) sont dans leur deuxième position verrouillée,
**caractérisée en ce que** le dispositif de verrouillage (6) comprend également :
- plusieurs encoches de cliquetage (301-309 ; 311-318) solidaires d'un élément (18; 20) du mécanisme d'entraînement (16) et juxtaposées dans la direction de mouvement par rapport au bâti (14) de l'élément (18; 20) du mécanisme d'entraînement (16), les encoches de cliquetage (301-309 ; 311-318) comprenant une encoche finale (309; 318) et au moins une encoche intermédiaire (303-308; 312-317), et
- un cliquet (26) mobile dans un logement (326) du bâti (14) et repoussé par un ressort (28) en direction de l'une des encoches de cliquetage (301-309 ; 311-318) ;
et **en ce que** :
- lorsque le cliquet (26) coopère avec l'encoche intermédiaire (303-308; 312-317), le cliquet (26) limite le mouvement de l'élément coulissant (20) vers sa position avancée à une position intermédiaire entre la position avancée et la position reculée, et
- dans la configuration accouplée, le cliquet (26) coopère avec l'encoche finale (309 ; 318) et maintient l'élément coulissant (20) dans la position reculée.

2. Plaque multi-raccords selon la revendication 1, **caractérisée en ce qu'**en configuration d'engagement dans l'une des encoches de cliquetage (301-309 ; 311-318), le cliquet (26) est monté dans le bâti (14) avec possibilité de coulissement selon un axe de coulissement (Z26 ; X26), de préférence parallèle à la direction de raccordement (Z).

3. Plaque multi-raccords selon la revendication 2, **caractérisée en ce que** le cliquet (26) est apte à être repoussé par le ressort (28) en coopération selon l'axe de coulissement (Z26 ; X26) avec une surface (322a) du bâti (14) dans une position de maintien du cliquet (26) dans laquelle le cliquet (26) est dégagé par rapport aux encoches de cliquetage (301-309; 311-318).

4. Plaque multi-raccords selon la revendication 3, **caractérisée en ce que** le cliquet (26) est équipé d'au moins un pion (264) en saillie, **en ce que** le bâti (14) comprend une rainure longitudinale (320) orientée selon l'axe de coulissement (Z26 ; X26) du cliquet (26) et une encoche de maintien (322) dans laquelle la rainure longitudinale (320) débouche circonférentiellement à l'axe de coulissement (Z26 ; X26), **en ce que** le pion (264) coopère avec la rainure longitudinale (320) en configuration d'engagement du cliquet (26) dans l'une des encoches de cliquetage (301-309 ; 311-318), et **en ce que** le cliquet (26) est en position de maintien lorsque le pion (264) est engagé dans l'encoche de maintien (322).

5. Plaque multi-raccords selon l'une des revendications précédentes, **caractérisée en ce que** les encoches de cliquetage (301-309) sont ménagées sur l'élément tournant (18).

6. Plaque multi-raccords selon l'une des revendications précédentes, **caractérisée en ce que** chaque encoche de cliquetage intermédiaire (303-308 ;312-317) et finale (309 ; 318) est délimitée par un fond (333-339 ; 352-358) et une surface de butée (324) qui s'étend en saillie depuis le fond (333-339; 352-358) et **en ce que**, en configuration d'engagement dans l'une des encoches de cliquetage intermédiaire (303-308 ; 312-317) et finale (309 ;318), le cliquet (26) forme obstacle à la surface de butée (324) dans une direction de mouvement (R2 ; T2) de l'élément (18 ; 20) du mécanisme d'entraînement (16) avec encoches de cliquetage entre la configuration accouplée et la configuration désaccouplée.

7. Plaque multi-raccords selon l'une des revendications précédentes, **caractérisée en ce qu'**une amplitude de cliquetage (a) du mécanisme d'entraînement (16) correspond à une rotation de 20° à 40° de l'élément tournant (18) dans le bâti (14).

8. Plaque multi-raccords selon l'une des revendications précédentes, **caractérisée en ce que** la profondeur de chaque encoche intermédiaire (303-308, 311-317) est variable.

9. Plaque multi-raccords selon l'une des revendications précédentes, **caractérisée en ce que** la profondeur (pf2) de l'encoche de cliquetage finale (309) est supérieure à la profondeur maximale (pf1) des encoches de cliquetage intermédiaires (303-308).

10. Plaque multi-raccords selon la revendication 9, **caractérisée en ce que** le cliquet (26) comporte un marqueur visuel (268), visible de l'extérieur du dispositif de verrouillage (6) excepté quand le cliquet (26) coopère avec le fond (339) de l'encoche de cliquetage finale (309).

11. Plaque multi-raccords selon l'une des revendications précédentes, **caractérisée en ce que** les organes de verrouillage (22) sont dans leur deuxième position verrouillée dès que le cliquet (26) est engagé dans la première ou la deuxième encoche intermédiaire (303, 304).

12. Plaque multi-raccords selon l'une des revendications précédentes, **caractérisée en ce que** l'élément tournant (18) est solidaire en rotation d'un profil de prise (180) pour un outil (34), ce profil de prise (180) étant accessible depuis l'extérieur du bâti (14).

13. Plaque multi-raccords selon l'une des revendications précédentes, **caractérisée en ce que** les éléments de transformation du mouvement de rotation de l'élément tournant (18) en mouvement de translation de l'élément coulissant (20) comprennent un doigt de commande (24) dont l'axe longitudinal central (X24) est décalé de l'axe de rotation (X18) de l'élément tournant (18), le doigt de commande (24) étant lié en rotation autour de l'axe de rotation (X18) avec l'élément tournant (18) et lié en translation avec l'élément coulissant (20) selon la direction de raccordement (Z), l'élément coulissant (20) étant guidé par un logement (142) du bâti (14) dans son mouvement de translation.

14. Plaque multi-raccords selon l'une des revendications précédentes, **caractérisée en ce que** l'élément coulissant (20) comprend un arbre de verrouillage (200) avec une portion de diamètre réduit (208) et une extrémité évasée (210), **en ce qu'**une bague de verrouillage (202) entoure l'arbre de verrouillage (200) et loge des billes de verrouillage (22) formant les organes de verrouillage, la bague de verrouillage (202) étant mobile par rapport à l'arbre de verrouillage (200) entre une position rétractée dans laquelle les billes de verrouillage (22) sont aptes à venir dans leur première position déverrouillée, avec les billes de verrouillage (22) coopérant avec la portion de diamètre réduit (208) et étant en retrait de la surface radiale externe (202d) de la bague de verrouillage (202), et une position avancée dans laquelle les billes de verrouillage (22) sont repoussées radialement par l'extrémité évasée (210) dans leur deuxième position verrouillée, en saillie de la surface radiale externe (202d) de la bague de verrouillage (202), un ressort (204) rappelant la bague de verrouillage (202) vers sa position avancée.

15. Ensemble de plaques (E) avec une première plaque multi-raccords (P1) selon l'une des revendications précédentes et une deuxième plaque (P2) complémentaire, la deuxième plaque (P2) portant un élément de verrouillage (12) délimitant un volume de réception (120) adapté pour recevoir les organes de verrouillage (22), **caractérisé en ce qu'**en configuration accouplée de la plaque (P1) avec la plaque (P2), les organes de verrouillage (22) sont dans leur position verrouillée et engagés dans le volume de réception (120) de l'élément de verrouillage (12) et les éléments de raccord (2) sont accouplés aux éléments de raccord complémentaires (4).

## Patentansprüche

1. Multianschlussplatte (P1) für den gleichzeitigen Anschluss von mehreren fluidischen und/oder elektrischen Anschlüssen (R), wobei die Platte (P1) eine Verriegelungsvorrichtung (6) gemäß einer Richtung (Z) des Anschlusses von durch die Platte (P1) getragenen Anschlusselementen mit von einer zweiten Platte (P2) getragenen komplementären Anschlusselementen (4) aufweist, wobei die Verriegelungsvorrichtung (6) einen auf der Platte (P1) feststehenden Ständer (14), Verriegelungselemente (22) und einen Antriebsmechanismus (16) aufweist, wobei der Antriebsmechanismus (16) umfasst:
- ein Drehelement (18), das in dem Ständer (14) zwischen einer entkoppelten Konfiguration und einer gekoppelten Konfiguration der Platte (P1) drehbeweglich ist,
- ein Verschiebeelement (20), das translatorisch in Bezug auf den Ständer (14) gemäß der Anschlussrichtung (Z) beweglich ist und das mit den Verriegelungselementen (22) zusammenarbeitet, wobei die Verriegelungselemente (22) in Bezug auf das Verschiebeelement (20) zwischen einer ersten entriegelten Position, in der sie einen Durchgang für die zweite Platte (P2) in Bezug auf das Verschiebeelement (20) freigegeben, und einer zweiten verriegelten Position, in der sie geeignet sind, das Verschiebeelement (20) und die zweite Platte (P2) gemäß der Anschlussrichtung (Z) zu verbinden, beweglich sind,
- ein Element oder Elemente (24) zur Umwandlung der Drehbewegung des Drehelementes (18) in eine Längsbewegung des Verschiebeelementes (20), wobei
in der entkoppelten Konfiguration das Verschiebeelement (20) in einer in Bezug auf den Ständer (14) vorgerückten Position ist und die Verriegelungselemente (22) fähig sind, in ihre erste entriegelte Position zu kommen,
in der gekoppelten Konfiguration das Verschiebeelement (20) in einer in Bezug auf den Ständer (14) zurückgezogenen Position ist und die Verriegelungselemente (22) in ihrer zweiten verriegelten Position sind,
**dadurch gekennzeichnet, dass** die Verriegelungsvorrichtung (6) gleichfalls umfasst:
- mehrere Rastvertiefungen (301 bis 309; 311 bis 318), die mit einem Element (18; 20) des Antriebsmechanismus (16) verbunden sind und in der Richtung der Bewegung des Elementes (18; 20) des Antriebsmechanismus (16) bezüglich des Ständers (14) nebeneinander liegen, wobei die Rastvertiefungen (301 bis 309; 311 bis 318) eine Abschlussvertiefung (309; 318) und mindestens eine Zwischenvertiefung (303 bis 308; 312 bis 300) umfassen, und
- eine Klinke (26), die in einem Aufnahmeraum (326) des Ständers (14) beweglich ist und von einer Feder (28) in Richtung einer der Rastvertiefungen (301 bis 309; 311 bis 308) gedrückt wird;
und dass:
- wenn die Klinke (26) mit der Zwischenvertiefung (303 bis 308; 312 bis 317) zusammenarbeitet, die Klinke (26) die Bewegung des Verschiebeelementes (20) in seine vorgerückten Position auf eine Zwischenposition zwischen der vorgerückten Position und der zurückgezogenen Position begrenzt, und
- in der gekoppelten Konfiguration die Klinke (26) mit der Abschlussvertiefung (309; 308) zusammenarbeitet und das Verschiebeelement (20) in der zurückgezogenen Position hält.

2. Multianschlussplatte nach Anspruch 1, **dadurch gekennzeichnet, dass** in der Konfiguration des Eingriffs in eine der Rastvertiefungen (301 bis 309; 311 bis 318) die Klinke (26) in dem Ständer (14) mit der Möglichkeit des Gleitens gemäß einer Schiebeachse (Z26; X26), vorzugsweise parallel zur Anschlussrichtung (Z) montiert ist.

3. Multianschlussplatte nach Anspruch 2, **dadurch gekennzeichnet, dass** die Klinke (26) geeignet ist, von der Feder (28) im Zusammenwirken mit einer Fläche (322a) des Ständers (14) in eine Position des Haltens der Klinke (26) gedrückt zu werden, in der die Klinke (26) in Bezug auf die Rastvertiefungen (301 bis 309; 311 bis 318) frei ist.

4. Multianschlussplatte nach Anspruch 3, **dadurch gekennzeichnet, dass** die Klinke (26) mit mindestens einem hervorragenden Ansatz (264) ausgerüstet ist, dass der Ständer (14) eine gemäß der Schiebeachse (Z26; X26) der Klinke (36) gerichtete Längsnut (320) und eine Haltevertiefung (322) umfasst, in der die Längsnut (320) umfänglich an der Schiebeachse (Z26; X26) mündet, dass der Ansatz (264) mit der Längsnut (320) in der Konfiguration des Eingriffs der Klinke (26) in eine der Rastvertiefungen (301 bis 309; 311 bis 318) zusammenwirkt und dass die Klinke (26) in Halteposition ist, wenn der Ansatz (264) in die Haltevertiefung (322) eingreift.

5. Multianschlussplatte nach einem der vorhergehenden Ansprüche,
**dadurch gekennzeichnet, dass** die Rastvertiefungen (301 bis 309) an dem Drehelement (18) angeordnet sind.

6. Multianschlussplatte nach einem der vorhergehenden Ansprüche,
**dadurch gekennzeichnet, dass** jede Zwischen- und Abschlussrastvertiefung (303 bis 308; 312 bis 317; 309; 318) von einem Boden (333 bis 339; 352 bis 358) und einer Anschlagfläche (324), die sich von dem Boden (333 bis 339; 352 bis 358) hervorragend erstreckt, begrenzt ist und dass in der Konfiguration des Eingriffs in eine der Zwischen- und Abschlussrastvertiefungen (303 bis 308; 312 bis 317; 309; 318) die Klinke (26) ein Hindernis für die Anschlagfläche (324) in der Richtung (R2; T2) der Bewegung des Elementes (18; 20) des Antriebsmechanismus (16) mit Rastvertiefungen zwischen der gekoppelten Konfiguration und der entkoppelten Konfiguration bildet.

7. Multianschlussplatte nach einem der vorhergehenden Ansprüche,
**dadurch gekennzeichnet, dass** eine Rastamplitude (a) des Antriebsmechanismus (16) einer Drehung von 20° bis 40° des Drehelementes (18) in dem Ständer (14) entspricht.

8. Multianschlussplatte nach einem der vorhergehenden Ansprüche,
**dadurch gekennzeichnet, dass** die Tiefe jeder Zwischenvertiefung (303 bis 308, 311 bis 317) variabel ist.

9. Multianschlussplatte nach einem der vorhergehenden Ansprüche,
**dadurch gekennzeichnet, dass** die Tiefe (pf2) der Abschlussrastvertiefung (309) größer als die maximale Tiefe (pf1) der Zwischenrastvertiefungen (303 bis 308) ist.

10. Multianschlussplatte nach Anspruch 9, **dadurch gekennzeichnet, dass** die Klinke (26) eine Sichtmarkierung (268) aufweist, die von außerhalb der Verriegelungsvorrichtung (6) sichtbar ist, außer in dem Fall, in dem die Klinke (26) mit den Boden (339) der Abschlussrastvertiefung (309) zusammenarbeitet.

11. Multianschlussplatte nach einem der vorhergehenden Ansprüche,
**dadurch gekennzeichnet, dass** die Verriegelungselemente (22) in ihrer zweiten verriegelten Position sind, sobald die Klinke (26) in die erste oder zweite Zwischenvertiefung eingreift.

12. Multianschlussplatte nach einem der vorhergehenden Ansprüche,
**dadurch gekennzeichnet, dass** das Drehelement (18) mit einem Profil (180) für einen Eingriff eines Werkzeugs (34) drehfest verbunden ist, wobei dieses Eingriffsprofil (180) von außerhalb des Ständers (14) zugänglich ist.

13. Multianschlussplatte nach einem der vorhergehenden Ansprüche,
**dadurch gekennzeichnet, dass** die Elemente der Umwandlung der Drehbewegung des Drehelementes (18) in eine Längsbewegung des Verschiebeelementes (20) einen Schaltfinger (24) umfassen, dessen mittlere Längsachse (X24) zu der Drehachse (X18) des Drehelementes (18) versetzt ist, wobei der Schaltfinger (24) hinsichtlich der Drehung um die Drehachse (X18) mit dem Drehelement (18) verbunden ist und translatorisch mit dem Verschiebeelement (20) gemäß der Anschlussrichtung (Z) verbunden ist, wobei das Verschiebeelement (20) in seiner Längsbewegung von einem Aufnahmeraum (142) des Ständers (14) geführt ist.

14. Multianschlussplatte nach einem der vorhergehenden Ansprüche,
**dadurch gekennzeichnet, dass** das Verschiebeelement (20) eine Verriegelungswelle (200) mit einem Abschnitt (208) mit verringertem Durchmesser und einem vergrößerten Ende (210) umfasst, dass eine Verriegelungshülse (202) die Verriegelungswelle (200) umgibt und Verriegelungskugeln (22), die die Verriegelungselemente bilden, aufnimmt, wobei der Verriegelungshülse (202) in Bezug auf die Verriegelungswelle (200) zwischen einer zurückgezogenen Position, in der die Verriegelungskugeln (22) geeignet sind, in ihre erste entriegelten Position zu kommen, wobei die Verriegelungskugeln (22) mit dem Abschnitt (208) verringerten Durchmessers zusammenwirken und von der radialen Außenfläche (202d) der Verriegelungshülse (202) zurückgezogenen sind, und einer vorgerückten Position beweglich ist, in der die Verriegelungskugeln (22) radial von dem erweiterten Ende (210) in ihre zweite verriegelte, von der radialen Außenfläche (202d) der Verriegelungshülse (202) herausragenden Position zurückgedrückt werden, wobei eine Feder (204) die Verriegelungshülse (202) in ihre vorgerückte Position vorgespannt.

15. Plattenbaugruppe (E) mit einer ersten Multianschlussplatte (P1) nach einem der vorhergehenden Ansprüche und einer zweiten komplementären Platte (P2), wobei die zweite Platte (P2) ein Verriegelungselement (12) trägt, das ein Aufnahmevolumen (120), ausgebildet zur Aufnahme von Verriegelungselementen (22), begrenzt, **dadurch gekennzeichnet, dass** in der gekoppelten Konfiguration der Platte (P1) mit der Platte (P2) die Verriegelungselemente (22) in ihrer verriegelten Position und im Eingriff in dem Aufnahmevolumen (120) des Verriegelungselementes (12) sind und die Anschlusselemente (2) mit den komplementären Anschlusselementen (4) gekoppelt sind.

## Claims

1. A multi-couplings plate (P1) for the simultaneous connection of several fluid and/or electrical couplings (R), the plate (P1) having a locking device (6) in a connecting direction (Z) for connector elements (2) supported by the plate (P1) to complementary connector elements (4) supported by a second plate (P2), the locking device (6) comprising a frame (14) fixed on the plate (P1), locking members (22) and a drive mechanism (16), the drive mechanism (16) comprising:
- a rotary element (18) mounted rotating in the frame (14), between an uncoupled configuration and a coupled configuration of the plate (P1),
- a sliding element (20) translatable relative to the frame (14) along the connecting direction (Z) and which cooperates with the locking members (22), the locking members (22) being movable relative to the sliding element (20) between a first unlocked position where they free a passage for the second plate (P2) relative to the sliding element (20), and a second locked position where they are able to secure the sliding element (20) and the second plate (P2) in the connecting direction (Z),
- one or more elements (24) for converting the rotational movement of the rotary element (18) into a translational movement of the sliding element (20),
in the uncoupled configuration, the sliding element (20) is in a forward position relative to the frame (14) and the locking members (22) are able to come into their first unlocked position,
in the coupled configuration, the sliding element (20) is in a withdrawn position relative to the frame (14) and the locking members (22) are able to come into their second locked position,
**characterized in that** the locking device (6) also comprises:
- several ratchet notches (301-309; 311-318) secured to an element (18; 20) of the drive mechanism (16) and juxtaposed in the movement direction relative to the frame (14) of the element (18; 20) of the drive mechanism (16), the ratchet notches (301-309; 311-318) comprising a final notch (309; 318) and at least one intermediate notch (303-308; 312-317), and
- a pawl (26) movable in a housing (326) of the frame (14) and pushed back by a spring (28) toward one of the ratchet notches (301-309; 311-318); and **in that**:
- when the pawl (26) cooperates with the intermediate notch (303-308; 312-317), the pawl (26) limits the movement of the sliding element (20) toward its forward position to a position midway between the forward position and the withdrawn position, and
- in the coupled configuration, the pawl (26) cooperates with the final notch (309; 318) and keeps the sliding element (20) in the withdrawn position.

2. The multi-couplings plate according to claim 1, **characterized in that** in the engagement configuration in one of the ratchet notches (301-309; 311-318), the pawl (26) is mounted in the frame (14) with the possibility of sliding along a sliding axis (Z26; X26), preferably parallel to the connection direction (Z).

3. The multi-couplings plate according to claim 2, **characterized in that** the pawl (26) is able to be pushed back by the spring (28) in cooperation along the sliding axis (Z26; X26) with a surface (322a) of the frame (14) into a maintenance position of the pawl (26) in which the pawl (26) is freed relative to the ratchet notches (301-309; 311-318).

4. The multi-couplings plate according to claim 3, **characterized in that** the pawl (26) is equipped with at least one protruding pin (264), **in that** the frame (14) comprises a longitudinal groove (320) oriented along the sliding axis (Z26; X26) of the pawl (26) and a maintaining notch (322) in which the longitudinal groove (320) emerges circumferentially with respect to the sliding axis (Z26; X26), **in that** the pin (264) cooperates with the longitudinal groove (320) in the engaged configuration of the pawl (26) in one of the ratchet notches (301-309; 311-318), and **in that** the pawl (26) is in the maintaining position when the pin (264) is engaged in the maintaining notch (322).

5. The multi-couplings plate according to any one of the preceding claims, **characterized in that** the ratchet notches (301-309) are arranged on the rotary element (18).

6. The multi-couplings plate according to one of the preceding claims, **characterized in that** each intermediate (303-308; 312-317) and final (309; 318) ratchet notch is delimited by a bottom (333-339; 352-358) and a stop surface (324) that protrudes from the bottom (333-339; 352-358) and **in that**, in the engagement configuration in one of the intermediate (303-308; 312-317) and final (309; 318) ratchet notches, the pawl (26) forms an obstacle to the stop surface (324) in a movement direction (R2; T2) of the element (18; 20) of the drive mechanism (16) with ratchet notches between the coupled configuration and the uncoupled configuration.

7. The multi-couplings plate according to one of the preceding claims, **characterized in that** a ratchet amplitude (α) of the drive mechanism (16) corresponds to a 20° to 40° rotation of the rotary element (18) in the frame (14).

8. The multi-couplings plate according to one of the preceding claims, **characterized in that** the depth of each intermediate notch (303-308, 311-317) is variable.

9. The multi-couplings plate according to one of the preceding claims, **characterized in that** the depth (pf2) of the final ratchet notch (309) is greater than the maximum depth (pf1) of the intermediate ratchet notches (303-308).

10. The multi-couplings plate according to claim 9, **characterized in that** the pawl (26) has a visual marker (268), visible on the outside of the locking device (6) except when the pawl (26) cooperates with the bottom (339) of the final ratchet notch (309).

11. The multi-couplings plate according to one of the preceding claims, **characterized in that** the locking members (22) are in their second locked position when the pawl (26) is engaged in the first or second intermediate notch (303, 304).

12. The multi-couplings plate according to one of the preceding claims, **characterized in that** the rotary element (18) is secured in rotation with an engagement profile (180) for a tool (34), this engagement profile (180) being accessible from outside the frame (14).

13. The multi-couplings plate according to one of the preceding claims, **characterized in that** the elements for converting the rotational movement (18) of the rotary element into a translational movement of the sliding element (20) comprise a control finger (24), the central longitudinal axis (X24) of which is offset from the rotation axis (X18) of the rotary element (18), the control element (24) being connected in rotation around the rotation axis (X18) with the rotary element (18) and connected in translation with the sliding element (20) along the connecting direction (Z), the sliding element (20) being guided by a housing (142) of the frame (14) in its translational movement.

14. The multi-couplings plate according to one of the preceding claims, **characterized in that** the sliding element (20) comprises a lock shaft (200) with a portion having a smaller diameter (208) and a flared end (210), **in that** a locking ring (202) surrounds the lock shaft (200) and houses friction balls (22) forming the locking members, the locking ring (202) being movable relative to the lock shaft (200) between a retracted position in which the friction balls (22) are able to enter their first unlocked position, with the friction balls (22) cooperating with the portion of smaller diameter (208) and being withdrawn from the outer radial surface (202d) of the locking ring (202), and a forward position in which the friction balls (22) are pushed radially back by the flared end (210) into their second locked position, protruding from the outer radial surface (202d) of the locking ring (202), a spring (204) returning the locking ring (202) toward its forward position.

15. An ensemble of plates (E) with a first multi-couplings plate (P1) according to one of the preceding claims and a second complementary plate (P2), the second plate (P2) bearing a locking element (12) defining a receiving volume (120) capable of receiving the locking members (22), **characterized in that** in the coupled configuration of the plate (P1) with the plate (P2), the locking members (22) are in their position locked and engaged in the receiving volume (120) of the locking element (12) and the connector elements (2) are coupled to the complementary connector elements (4).
